(19) Europäisches Patentamt
European Patent Office
Office européen des brevets

(11) Veröffentlichungsnummer: **0 205 080**
**B1**

(12) # EUROPÄISCHE PATENTSCHRIFT

(45) Veröffentlichungstag der Patentschrift: **18.01.89**

(51) Int. Cl.⁴: **C 09 B 62/00**, C 09 B 19/00, D 06 P 1/38

(21) Anmeldenummer: **86107528.1**

(22) Anmeldetag: **03.06.86**

(54) **Triphendioxazin-disulfimid-Reaktivfarbstoffe.**

(30) Priorität: **14.06.85 DE 3521358**

(43) Veröffentlichungstag der Anmeldung: **17.12.86 Patentblatt 86/51**

(45) Bekanntmachung des Hinweises auf die Patenterteilung: **18.01.89 Patentblatt 89/3**

(84) Benannte Vertragsstaaten: **CH DE GB LI**

(56) Entgegenhaltungen:
**EP-A- 0 053 743**
**DE-A- 3 336 362**

(73) Patentinhaber: **BAYER AG, Konzernverwaltung RP Patentabteilung, D-5090 Leverkusen 1 Bayerwerk (DE)**

(72) Erfinder: **Harms, Wolfgang, Dr., Walter-Flex-Strasse 21, D-5090 Leverkusen 1 (DE)**
Erfinder: **Wunderlich, Klaus, Dr., Carl-Rumpff-Strasse 21, D-5090 Leverkusen 1 (DE)**

EP 0 205 080 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind Farbstoffe der Formel

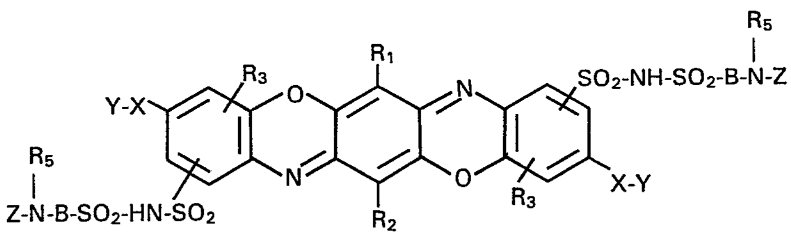

(I)

worin

$R_1$ bzw. $R_2$ Wasserstoff, Chlor, Brom, gegebenenfalls substituiertes $C_1$-$C_4$-Alkyl, gegebenenfalls substituiertes $C_1$-$C_4$-Alkoxy- gegebenenfalls substituiertes Phenoxy, gegebenenfalls substituiertes Acylamino, Carboxy oder gegebenenfalls substituiertes Carbonamid,

$R_3$ Wasserstoff, $C_1$-$C_4$-Alkyl, Cl, Br oder $C_1$-$C_4$-Alkoxy,

X N-$R_4$ oder O,

$R_4$ bzw. $R_5$ Wasserstoff oder gegebenenfalls substituiertes $C_1$-$C_4$-Alkyl,

Y Wasserstoff oder gegebenenfalls substituiertes $C_1$-$C_6$-Alkyl oder durch Heteroatome oder Heteroatome enthaltende Gruppierungen unterbrochene oder substituierte Alkylreste, Cycloalkylreste, Aralkylreste oder gegebenenfalls durch Sulfo, Carboxy, $C_1$-$C_4$-Alkyl, $C_1$-$C_4$-Alkoxy oder Halogen substituierte Phenylreste,

B $C_2$-$C_6$-Alkylenreste oder gegebenenfalls durch $C_1$-$C_4$-Alkyl, Halogen oder $C_1$-$C_4$-Alkoxy substituierte Phenylenreste und

Z Wasserstoff oder einen faserreaktiven Rest bedeuten.

Charakteristisches Merkmal der beanspruchten Farbstoffe sind somit zwei Disulfimid-Reste an den äusseren aromatischen Kernen des Triphendioxazinchromophors. Diese Gruppen sind Teil eines Brückengliedes, das endständig faserreaktive Reste tragen kann. Dioxazinfarbstoffe mit derartigen Brückengliedern sind dem zur Verfügung stehenden Stand der Technik weder zu entnehmen, noch findet man darin eine konkrete Anregung zur Synthese solcher Farbstoffe.

Geeignete Acylaminoreste $R_1$/$R_2$ sind Acetylamino oder Benzoylamino. Geeignete Carbonamidreste $R_1$/$R_2$ sind $CONH_2$, N-($C_1$-$C_4$)-Monoalkyl- oder N,N-($C_1$-$C_4$)-Dialkylcarbonamido.

Geeignete Alkylreste $R_4$/$R_5$ sind Methyl, Ethyl, Propyl, Butyl, Hydroxyethyl, Sulfatoethyl, Sulfoethyl, Phosphatoethyl, Carboxyethyl, Carboxypropyl, Carboxybutyl, Halogenalkyl wie Chlorethyl, Chlorpropyl, Pentyl, Hexyl. Vorzugsweise stehen $R_1$ und $R_2$ für Cl, $R_3$-$R_5$ für Wasserstoff.

Geeignete Reste Y sind neben H durch Sulfo-, Sulfato-, Carboxy-, Hydroxy-, Alkoxygruppen substituierte Alkylreste wie 2-Sulfoethyl, 2-Sulfatoethyl, 2-Hydroxyethyl, 2-Carboxyethyl, Carboxymethyl, 3-Sulfatopropyl, 3-Methoxypropyl, 4-Hydroxybutyl, 4-Sulfatobutyl, 3-Ethoxypropyl, 3-Butoxypropyl, 2-Hydroxy-1-propyl, 3-Hydroxy-1-propyl, 2-Sulfato-1-propyl, 3-Hydroxy-1-butyl, 3-Sulfato-1-butyl, 3-Hydroxy-2-methyl-2-propyl, 3-Carboxy-1-propyl, 5-Carboxy-1-pentyl, sowie durch O, S oder N unterbrochene oder substituierte Alkylreste wie

$CH_2$-$CH_2$-O-$CH_2$-$CH_2$-OH,
-$CH_2$-$CH_2$O-$CH_2$-$CH_2$-$OSO_3H$,
-$CH_2$-$CH_2$-NH-$CH_2$-$CH_2$-OH,
-$CH_2$-$CH_2$-NH-$CH_2$-$CH_2$-$OSO_3H$,

-$CH_2$-$CH_2$-N($CH_3$)-$CH_2$-$CH_2$-OH,

-$CH_2$-$CH_2$-N($CH_3$)-$CH_2$-$CH_2$-$OSO_3H$,

-$CH_2$-$CH_2$-S-$CH_2$-$CH_2$-OH.

Cyclohexyl, 2-, 3-, 4-Methylcyclohexyl, Cyclophentyl, Cyclohexylmethyl, Benzyl, o-, m-, p-Sulfobenzyl, 2-Phenylethyl, 2-(o-, m-, p-Sulfophenyl)-ethyl, 1-Phenyl-2-propyl, 1-(o-, m-, p-Sulfophenyl)-2-propyl, 2-Benzylcyclohexyl, 2-(o-, m-, p-Sulfobenzyl)-cyclohexyl, 5-Methyl-1-phenyl-3-hexyl, 5-Methyl-1-(o-, m-, p-sulfophenyl)-3-hexylphenyl, 4-Methyl-2-sulfophenyl, 3-Methyl-4-sulfophenyl, 3-Methyl-4,6-disulfophenyl, 2-Methyl-4-sulfophenyl, 4-Methoxy-2-sulfophenyl, 2-Methoxy-4-sulfophenyl, 3-Methoxy-4-sulfophenyl, 3-Methoxy-4,6-disulfophenyl, 2-, 3-, 4-Methylphenyl, 2-, 3-, 4-Methoxyphenyl, 2,4-Dimethylphenyl, 3,4-Dimethylphenyl, 3,4-Dimethyl-5-sulfophenyl, 2-, 3-, 4-Chlorphenyl, 2,4-Dimethoxyphenyl, 2,5-Dimethoxyphenyl, 2,4-Dimethoxy-5-sulfophenyl, 2,4-Dimethoxy-3-sulfophenyl, 2,5-Dimethoxy-4- und -3-sulfophenyl, 3- und 4-Carboxyphenyl.

Geeignete Brückenglieder B sind $C_2$-$C_6$-Alkylenreste wie Ethylen, 1,2- und 1,3-Propylen, 1,2-, 1,3- und 1,4-Butylen, insbesondere Phenylen und durch $C_1$-$C_4$-Alkyl, Halogen, $C_1$-$C_4$-Alkoxy, substituiertes Phenylen, wie 1,2-, 1,3- und 1,4-Phenylen, 3-Methyl-1,4-phenylen, 4-Methyl-1,3-phenylen, 2-Methyl-1,3-phenylen, 4-Chlor-1,3-phenylen, 4-Methoxy-1,3-phenylen.

Vorzugsweise steht B für Phenylen.

Geeignete Reaktivgruppen, d.h. Gruppen, die mit den OH- oder NH-Gruppender Faser unter Färbebedingungen unter Ausbildung kovalenter Bindungen reagieren, sind insbesondere solche, die mindestens einen rekativen Substituenten an einen 5- oder 6-gliedrigen aromatisch-heterocyclischen Ring gebunden enthalten, bzw. an einen Monoazin-, Diazin-, Triazin-, z.B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, wie ein Chinolin-, Phthalazin-, Cinnolin-, Chinazolin-, Chinoxalin-, Acridin-, Phenazin- und Phenanthridin-Ring-System.

Unter den reaktiven Substituenten am Heterocyclus sind beispielsweise zu erwähnen Halogen (Cl, Br oder F), Ammonium einschliesslich Hydrazinium, Sulfonium, Sulfonyl, Azido-($N_3$), Rhodanido, Thio, Thiolether, Oxiether, Sulfinsäure und Sulfonsäure.

Im einzelnen sind beispielsweise zu nennen:

2,4-Difluortriazinyl-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl, Hydroxy, Cyan, $C_1$-$C_4$-Alkoxy, Carboxy, Sulfo oder Sulfato sind und Phenyl und Naphthyl, Sulfo, $C_1$-$C_4$-Alkyl, $C_1$-$C_4$-Alkoxy, Carboxy, Halogen oder Acylamino.

Im einzelnen seien folgende Reste genannt:

2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-β-Cyanoethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(x-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2′,5′-Disulfophenyl)-amino-4-fluor-triazinyl-6, 2-(o-, m-, p-Chlorphenyl)-amino-4-fluor-triazinyl-6, 2-(o-, m-, -Methoxyphenyl)-amino-4-fluor-triazinyl-6, 2-(2′-Methyl-4′-sulfophenyl)-amino-4-fluor-triazinyl-6, 2-(2′-Methyl-5′-sulfophenyl)-amino-4-fluor-triazinyl-6, 2-(2′-Chlor-4-sulfophenyl)-amino-4-fluor-triazinyl-6, 2-(2′-Chlor-5′-sulfophenyl)-amino-4-fluor-triazinyl-6, 2-(2′-Methoxy-4′-sulfophenyl)-amino-4-fluor-triazinyl-6, 2-(o-, m-, p-Carboxyphenyl)-amino-4-fluor-triazinyl-6, 2-(2′,4′-Disulfophenyl)-amino-4-fluor-triazinyl-6, 2-(3′,5′-Disulfophenyl)-amino-4-fluor-triazinyl-6, 2-(2′-Carboxy-4′-sulfophenyl)-amino-4-fluor-triazinyl-6, 2-(2′-Carboxy-4′-sulfophenyl)-amino-4-fluor-triazinyl-6, 2-(6′-Sulfonaphthyl-(2′))-amino-4-fluor-triazinyl-6, 2-(4′,8′-Disulfonapthyl-(2′))-amino-4-fluor-triazinyl-6, 2-(6′,8′-Disulfonapthyl-(2′))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperadino-4-fluor-triazinyl-6, 2-(4′,6′,8′-Trisulfonaphthyl-(2′))-amino-4-fluor-triazinyl-6, 2-(3′,6′,8′-Trisulfonaphthyl-(2′))-amino-4-fluor-triazinyl-6, 2-(3′,6′-Disulfonaphthyl-(1′))-amino-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-β-Methoxyethoxy-4-fluor-triazinyl-6, 2-Phenoxy-4-fluor-triazinyl-6, 2-(o-, m- oder p-Sulfophenoxy)-4-fluor-triazinyl-6, 2-(o-, m- oder p-Methyl- oder -Methoxy-phenoxy)-4-fluor-triazinyl-6, 2-β-Hydroxy-ethylmercapto-4-fluor-triazinyl-6, 2-Phenylmercapto-4-fluor-triazinyl-6, 2-(4′-Methylphenyl)-mercapto-4-fluortriazinyl-6, 2-(2′,4′-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Reste und die entsprechenden durch Austausch der Halogenatome mit tertiären Basen wie Trimethylamin, Triethylamin, Dimethyl-β-hydroxyethylamin, Triethanolamin, N,N-Dimethylhydrazin, Pyridin, - oder -Picolin, Nicotinsäure oder Isonicotinsäure oder Sulfinaten insbesondere Benzolsulfinsäure erhältlichen Reste.

Mono-, Di- oder Trihalogenpyrimidinylreste, wie 2,4-Dichlorpyrimidinyl-6-, 2,3,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4′,5′-Dichlorpyridazon-6′-yl-1′)-phenylsulfonyl- oder -carbonyl-, β-(4′,5′-Dichlorpyridazon-6′-yl-1)-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom--2-fluor-4-pyrimidinyl-, 2-Fluor-5-cyan-4-pyrimidinyl-, 2-Fluor-5-methyl-4-pyrimidinyl-, 2,5,6-Trifluor--4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5--brom-6-chlormethyl-4-pyrimidinyl-, 2,6-Difluor-5--chlormethyl-4-pyrimidinyl-, 2,6-Difluor-5-nitro-4--pyrimidinyl-, 2-Fluor-6-methyl-4-pyrimidinyl-, 2-Fluor-5-chlor-6-methyl-4-pyrimidinyl-, 2-Fluor-5--chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Flor-5-nitro-4-pyrimidinyl-, 2-Fluor-5-trifluormethyl-4-pyrimidinyl-, 2-Fluor-5-phenyl- oder -5-methylsulfonyl--4-pyrimidinyl-, 2-Fluor-5-carbonamido-4-pyrimidinyl-, 2-Fluor-5-carbomethoxy-4-pyrimidinyl-, 2-Fluor--5-brom-6-trifluormethyl-4-pyrimidinyl-, 2-Fluor-6--carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Methyl-4-fluor-5-methyl-sulfonyl-pyrimidinyl-6; 2,6-Difluor-5-methyl--sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; β-(4′-Fluor-5-chlorpyridazon-6′- yl-1′)-ethylcarbonyl-, sulfonylgruppenhaltige Triazinreste, wie 2,4-Bis-(phenylsulfonyl)-triazinyl-6-, 2-(3′-Carboxyphenyl)--sulfonyl-4-chlortriazinyl-6-, 2-(3′-Sulfophenyl)-sulfonyl-4-chlortriazinyl-6-, 2,4-Bis-(3′-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethylpyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl--5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl--5-chlor-6-methyl-pyrimidinyl-4-, 2-Methylsulfonyl--5-brom-6-methyl-pyrimidinyl-4-, 2-Methylsulfonyl--5-chlor-ethyl-pyrimidinyl-4-, 2-Methylsulfonyl-5--chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5--chlor-6-methyl-pyrimidinyl-4-, 2-Methylsulfonyl--6-chlor-pyrimidinyl-4-, 2,6-Bis-methylsulfonyl-5--chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl--4-, 2-Methylsulfonyl-5-chlor-pyrimidinyl-4-, 2-Sulfoethylsulfonyl-6-methyl-pyrimidinyl-4-, 2-Methylsulfonyl-5-brom-pyrimidinyl-4-, 2-Phenylsulfonyl-5--chlor-pyrimidinyl-4-, 2-Carboxymethylsulfonyl-5--chlor-6-methyl-pyrimidinyl-4-, 2-Methylsulfonyl-6--chlorpyrimidin-4- und -5-carbonyl-, 2,6-Bis-(methylsulfonyl)-pyrimidin-4- oder -5-carbonyl-, 2-Ethylsulfonyl-6-chlorpyrimidin-5-carbonyl-, 2,4-Bis--(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder -6-sulfonyl-, 2-Arylsulfonyl- oder Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6-sulfonyl oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl.

Des weiteren sind Reaktivgruppen der aliphatischen Reihe zu nennen, wie Acryloyl-, Mono-, Di- oder Trichloracryloyl-, wie -CO-CH=CH-Cl, -CO-CCl=$CH_2$, -CO-CCl=$CH_3$, ferner -CO-CCl=CH-COOH, -CO-CH=CCl-COOH, β-Chlorpropionyl-, 3-Phenylsulfonylpropionyl-, 3-Methylsulfonylpropionyl-, 2-Fluor-2-chlor-3,3-difluorcyclobuten-1--carbonyl-, 2,2,3,3-Tetrafluorcyclobutan-carbonyl--1- oder -sulfonyl-1-, β-(2,2,3,3-Tetrafluorcyclobutyl-2)-acryloyl-, α- oder β-Bromacryloyl-, α- oder β-Alkyl- oder -Arylsulfonylacryloyl-Gruppe, wie α- oder β-Methylsulfonylacryloyl, Chloracetyl, Vinylsulfonyl, $-SO_2CH_2CH_2Z$ worin Z = alkalisch abspaltbare Gruppe, insbesondere $-OSO_3H$, $-OCOCH_3$, $-S_2O_3H$, $-OPO_3H_2$, $-OCOC_6H_5$, Di-$C_1$-$C_4$-Alkylamino, quartäres Ammonium, insbesondere $-\overset{\oplus}{N}(C_1\text{-}C_4\text{-Alkyl})_3X^{\ominus}$ mit

$X^{\ominus}$ = Anion, insbesondere Halogen- oder Sulfat-Anion, -Cl, -Br, -F, -SCN, $-OSO_2C_6H_5$, $-O-SO_2-OCH_3$.

Bevorzugt unter den Farbstoffen der Formel )I) sind solche der Formeln II bis IV:

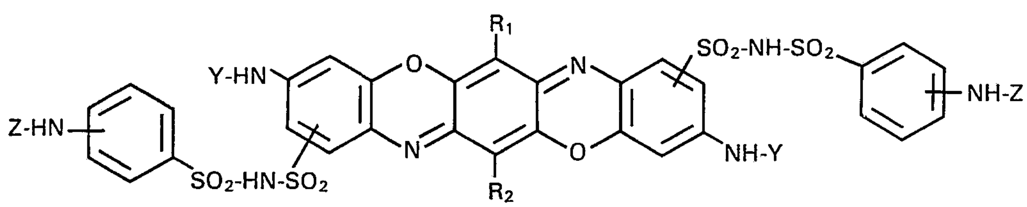

(II)

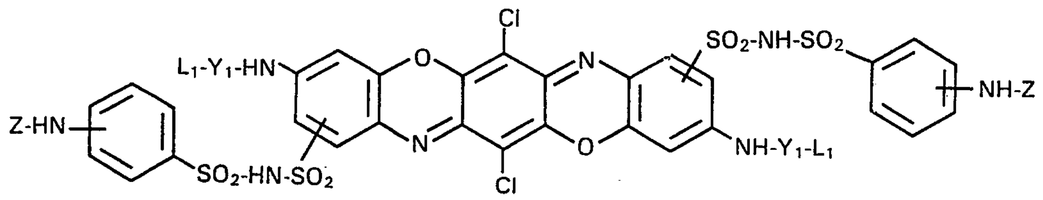

(III)

worin

$Y_1 = C_1\text{-}C_6$-Alkylen, $(C_1\text{-}C_4)$-Alkylenaryl

$L_1 = SO_3H, OSO_3H, COOH, OPO_3H_2$

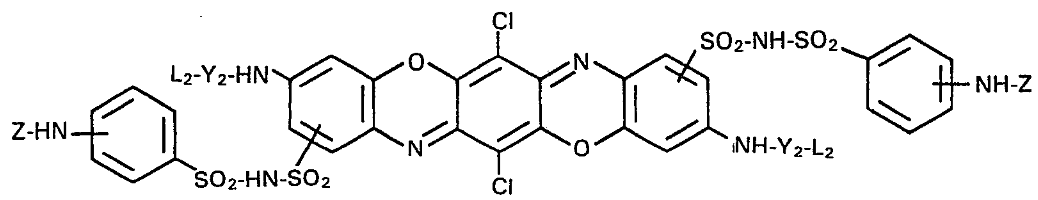

(IV)

worin

$Y_2 = C_2\text{-}C_3$-Alkylen

$L_2 = SO_3H, OSO_3H$

wobei die Reste $R_1$, $R_2$, Y und Z die vorstehend angegebene Bedeutung haben.

Generell sind solche Farbstoffe der Formenln (II) bis (IV) bevorzugt, in denen Z für den Rest eines Halogentriazins oder Halogenpyrimidins steht, insbesondere für einen Monochlor- bzw. Monofluor-triazinyl- oder einen Fluorpyrimidinylrest.

Farbstoffe der Formel (I) mit Z = faserreaktiver Rest werden in an sich bekannter Weise erhalten durch Kondensation von Verbindungen der Formel

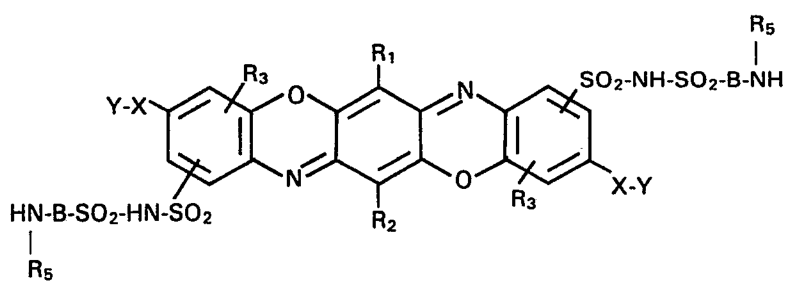

(V)

worin $R_1$-$R_3$, $R_5$, B, X und Y die oben angegebene Bedeutung haben, mit Reaktivkomponenten

Z-Halogen (VI)

worin

Z = faserreaktiver Rest

Halogen = F, Cl, Br.

Die Kondensation wird entweder in wässrigem oder wässrig-organischem Medium in Abhängigkeit von der eingesetzten Reaktivkomponente bei Temperaturen von 0 bis 80°C und pH-Werten von 3 bis 9 in Gegenwart alkalischer Kondensationsmittel wie wässriger Alkalihydrogencarbonat-, Alkalicarbonat-, Alkylihydroxid-, Alkalihydrogenphosphat-, Dialkalihydrogen-phosphat- oder Trialkaliphosphat-Lösung durchgeführt, oder aber die Kondensation wird in aprotischen organischen Lösungsmitteln wie Toluol, Halogenbenzolen, Nitrobenzol, Dimethylformamid, N-Methylpyrrolidon, Tetramethylensulfon, Dimethylsulfoxid, Aceton, Methylethylketon gegebenenfalls in Gegenwart aprotischer organischer Basen wie Trialkylamin, N,N-Dialkylanilin, Pyridin oder Alkylpyridinen bei Temperaturen von 0 bis 80°C durchgeführt.

Die Herstellung von Verbindungen der Formel (V) kann erfolgen nach an sich bekannten Methoden durch Kondensation von 1,4-Benzochinonen der Formel

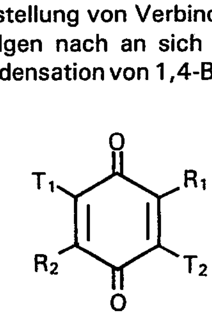

(VII)

worin

$T_1$, $T_2$ Wasserstoff, Cl, Br, O-Alkyl oder O-Aryl bedeuten,

mit 5-Amino-2-(X-Y-substituierten)-benzolsulfonamiden der Formel

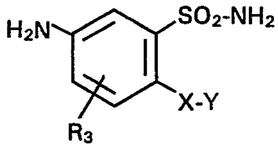

(VIII)

zu Verbindungen der Formel

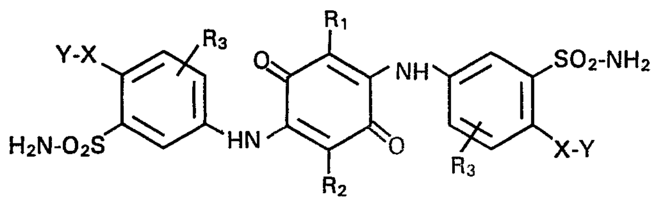

(IX)

nachfolgenden Ringschluss der Dianilide (IX) zu den Triphendioxazinverbindungen der Formel

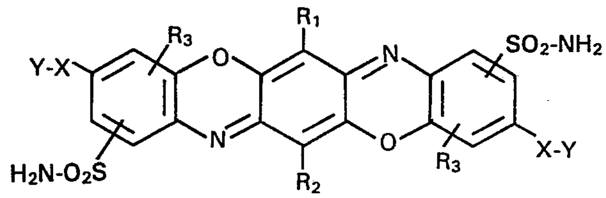

(X)

Weitere Umsetzung der Triphendioxazinsulfonamide der Formel (X) mit Sulfonsäurehalogeniden der Formel

$G_1$-B-$SO_2$-Cl (XI)

worin
$G_1$ $NO_2$, Acylamino oder Halogen bedeutet, zu Verbindungen der Formel

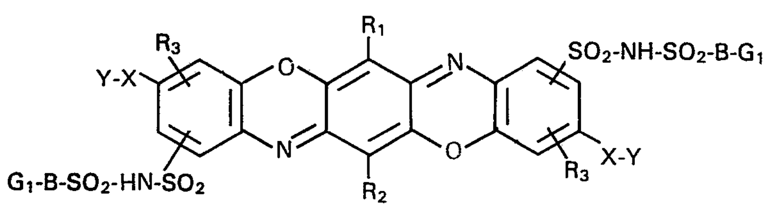

(XII)

und anschliessende funktionelle Umwandlung der Reste $G_1$ zu $NH_2$- oder NH-$R_5$-Gruppen durch Reduktion, Verseifung oder Halogensubstitution unter Bildung von Verbindungen der Formel (V).

Varianten, die zu Verbindungen der Formel (XII) führen, bestehen in der Kondensation von 1,4-Benzochinonen der Formel (VII) mit 5-Amino-2-(X-Y-substituierten)-benzoldisulfimiden der Formel

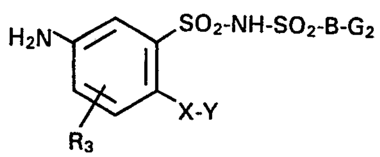

(XIII)

worin

$G_2 = G_1$ oder $NH-R_5$

zu Dianiliden der Formel

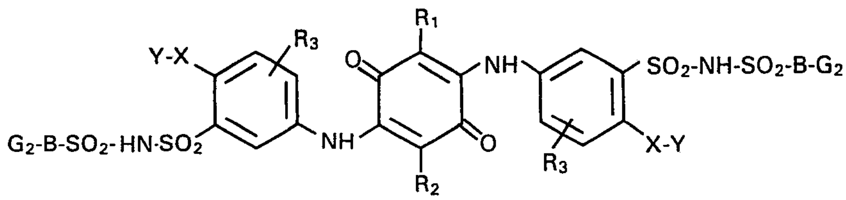

(XIV)

oder in der Kondensation von Verbindungen der Formel (IX) mit Sulfonsäurehalogeniden der Formel (XI) zu Verbindungen der Formel (XIV),

anschliessendem Ringschluss zu Triphendioxazinverbindungen und funktioneller Umwandlung der Gruppen $G_2$ zu $NH-R_5$.

Je nach den beim Ringschluss angewandten Reaktionsbedingungen können die Sulfonamid- bzw. Disulfimidgruppen bei den Dioxazinen (V), (X) oder (XII) in den Benzringen entweder in den o- oder in den p-Stellungen zu den Ringsauerstoffatomen des Dioxazinsystems auftreten.

Die Kondensation der Benzochinone der Formel (VII) mit den Aminobenzolsulfonamiden (VIII) oder Aminobenzoldisulfimiden (XIII) erfolgt am besten in wässrigem oder wässrig-organischem Medium unter Zugabe alkalischer Kondensationsmittel bei pH-Werten von 3 bis 11, vorzugsweise von 4 bis 8, und Temperaturen von 20 bis 90°C, vorzugsweise 40 bis 70°C, oder in gepufferten Lösungen, die obige alkalische Kondensationsmittel enthalten. Man kann auch in rein organischem Milieu unter Zusatz säurebindender Mittel arbeiten.

Alkalische Kondensationsmittel sind beispielsweise Natriumhydrogencarbonat, Natriumcarbonat, Natrium- oder Kaliumacetat, Natronlauge, Kalilauge, Natriumphosphate, Natriumborat.

Im allgemeinen fallen die Kondensationsprodukte der Formel (IX) oder (XIV) als schwerlösliche, braune Produkte aus.

Eine weitere Variante zur Herstellung von Verbindungen der Formeln (IX) oder (XIV) besteht in der Addition von Aminobenzolsulfonamiden (VIII) oder Aminobenzoldisulfimiden (XIII) an 1,4-Benzochinone der Formel

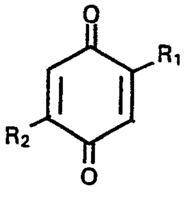

(XV)

worin

$R_1$ und $R_2$ die oben angegebene Bedeutung haben, und Oxydation der primär enstehenden Addukte.

Der Ringschluss der Chinonkondensationsprodukte (IX) oder (XIV) kann an an sich bekannten Methoden, wie sie in den Deutschen Offenlegungsschriften 2 122 262, 2 124 080, 2 302 382, 2 344 781, 2 503 611, 2 823 828 und in der Britischen Patentschrift 2 019 872 erwähnt sind, insbesondere in konzentrierter Schwefelsäure und vor allem in Oleum mit $SO_3$-Gehalten von 1 bis 50% bei Temperaturen von 10 bis 80°C gegebenenfalls mit Zusatz von Oxidationsmitteln wie Kalium- oder Ammoniumperoxodisulfat, Braunstein oder organischen Peroxiden vorgenommen werden.

Die neuen Farbstoffe sind wertvolle Produkte, die sich durch hohe Farbstärken auszeichnen. Sie eignen sich in dispergierter oder gelöster Form für die verschiedensten Anwendungszwecke.

In Form wasserlöslicher Verbindungen finden sie bevorzugtes Interesse für das Färben hydroxyl- und amidgruppenhaltiger Textilmaterialien, insbesondere von Materialien aus nativer und regenerierter Cellulose sowie synthetischen Polyamid- und Polyurethanfasern, Wolle und Seide.

Handelt es sich um wasserlösliche Reaktivfabrstoffe, so werden die genannten Materialien nach den für Reaktivfarbstoffe allgemein üblichen Verfahren gefärbt oder bedruckt. Gegenüber den bisher bekannten Triphendioxazin-Reaktivfarbstoffen zeichnen sich die erfindungsgemässen Farbstoffe durch verbesserte Auswaschbarkeit der hydrolysierten, nicht fixierten Farbstoffanteile aus. Man erhält licht- und nassechte Färbungen und Drucke.

Bei Temperaturangaben in den Beispielen handelt es sich um °C. Die Formeln der wasserlöslichen Farbstoffe in der Beschreibung und in den Beispielen sind die freien Säuren. Handelt es sich um Reaktivfarbstoffe, dann werden diese in der Regel in Form ihrer Alkalisalze, insbesondere der Lithium-, Natrium- oder Kaliumsalze oder Ammoniumsalze isoliert und angewandt.

Die in den Beispielen angegebenen Farbkennzahlen beziehen sich auf Color Index Hue Indication Chart (Indicator Numbers).

*Beispiel 1*

11,0 g Triphendioxazin-N-(aminophenylsulfonyl)-sulfonamid-Verbindung der Formel

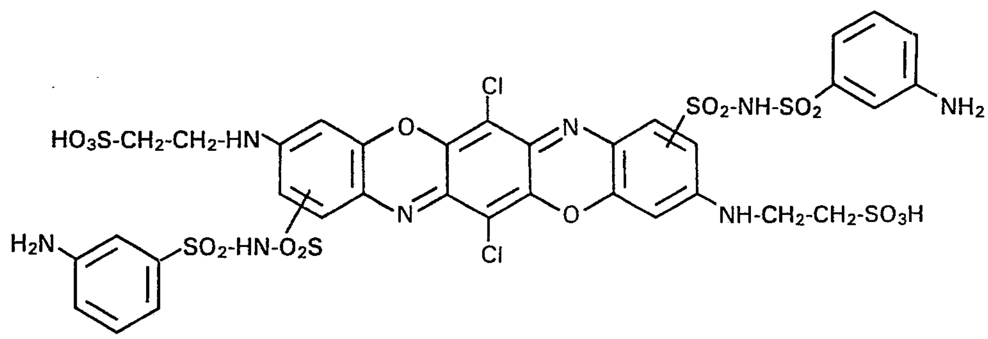

werden in 100 ml Wasser und 20 ml Aceton gelöst. Man lässt bei 20°C 2,4 ml 2,4,6-Trifluor-5-chlorpyrimidin zutropfen und hält mit 2 n Salzlösung den pH-Wert auf 5,5-6,0. Nach beendeter Umsetzung salzt man den Farbstoff mit Kaliumchlorid aus, saugt die feinen Nadeln ab und wäscht sie mit 10%iger Kaliumchloridlösung. Der erhaltene Farbstoff entspricht der Formel

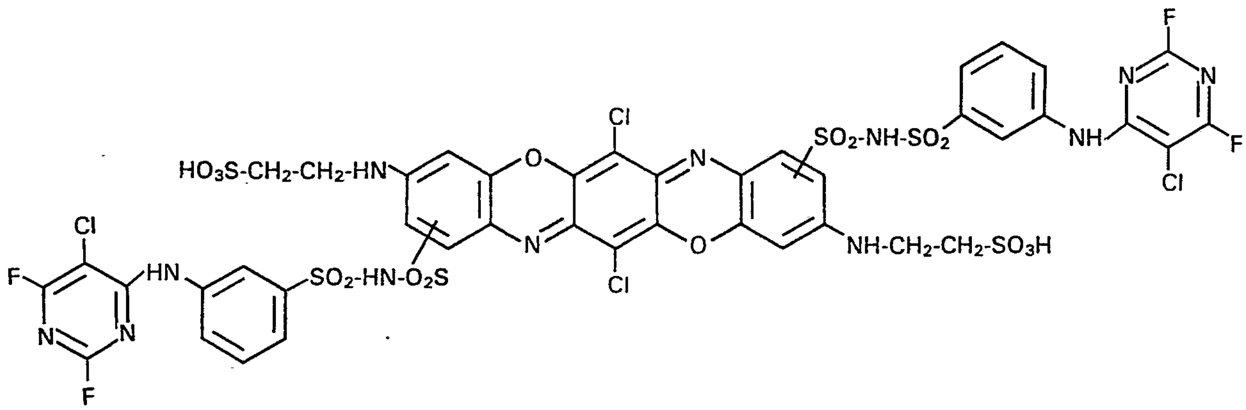

Er gibt auf Baumwolle aus langer Flotte klare, blaue Färbungen mit vorzüglichen Echtheiten.

C.I. Indicator Number 14, $\lambda_{max}$ = 653 nm in Wasser.

Die am Beginn des Beispiels 1 eingesetzte Triphendioxazindisulfimid-Verbindung lässt sich wie folgt herstellen:

66,7 g 5-Nitro-2-6β-sulfoethylamino)-benzolsulfonamid, hergestellt aus 2-Chlor-5-nitrobenzolsulfonamid und Taurin, werden in 450 ml Wasser in einem Autoklaven unter Zusatz von 2 g Raney-Nickel und unter einem Wasserstoffdruck von 60 bar bei 20 bis 60°C reduziert. Nach Abfiltration des Nickels wird die Lösung des entstandenen 5-Amino-2-(β--sulfoethylamino)-benzolsulfonamids mit 22,4 g 2,3,5,6-Tetrachlorbenzochinon und 50 ml Isopropanol versetzt und auf 40°C erwärmt. Durch Zutropfen von 2 n Sodalösung wird der pH-Wert dabei ständig auf 5,5 bis 6,0 gehalten. Nach Reaktionsende saugt man das ausgefallene braune Dianilid ab, wäsche es mit Methanol oder Aceton und trocknet es im Umluftschrank bei 50°C.

29,1 g des erhaltenen Dianilids werden in 84 ml 10%iges Oleum bei −5 bis −10°C in einer Stunde eingetragen. Man steigert danach die Temperatur auf 15°C und trägt unter Kühlung bei 10 bis 20°C innerhalb von 45 Minuten 20,6 g Kaliumperoxodisulfat ein. Nach beendeter Umsetzung rührt man das Reaktionsgemisch in 600 g Eis ein, saugt die Fällung ab und wäscht den Filterkuchen mit verdünnter Natriumchloridlösung und trocknet ihn gegebenenfalls bei 60°C im Umluftschrank.

25,2 g des erhaltenen Triphendioxazinsulfonamids werden in 680 ml Wasser bei pn 8,8 bis 8,0 mit 22,1 g 3-Nitrobenzolsulfochlorid bei 30°C kondensiert. In der erhaltenen Lösung wird die Nitrophenyldisulfimidverbindung durch Zutropfen von 30,6 g 25%iger Natriumhydrogensulfidlösung bei 60°C im Laufe von 45 Minuten reduziert, die gelöste Aminophenyldisulfimidverbindung durch Aussalzen und Absaugen isoliert, mit Salzlösung gewaschen und getrocknet.

*Beispiel 2*

12,0 g Triphendioxazindisulfimidverbindung der Formel

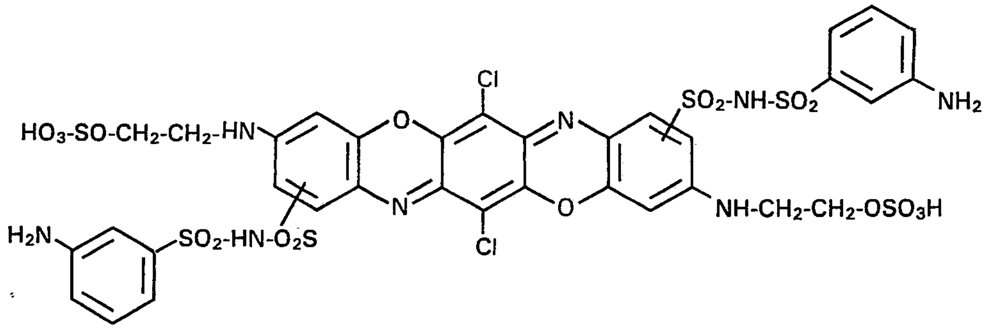

werden in 300 ml Wasser und 30 ml Aceton gelöst. Man stellt einen pH-Wert von 6 ein und lässt 3,6 ml 2,4,6-Trifluor-5-chlorpyrimidin im Laufe von 3 Stunden zutropfen. Während der Kondensation hält man den pH-Wert in der Reaktionslösung mit 2 n Sodalösung auf 5,8 bis 6,0. Nach beendeter Umsetzung wird der Farbstoff langsam ausgesalzen, die ausgeschiedenen Kristalle abgesaugt und der Filterkuchen mit 10%iger Natriumchloridlösung gewaschen. Der erhaltene Farbstoff entspricht der Formel

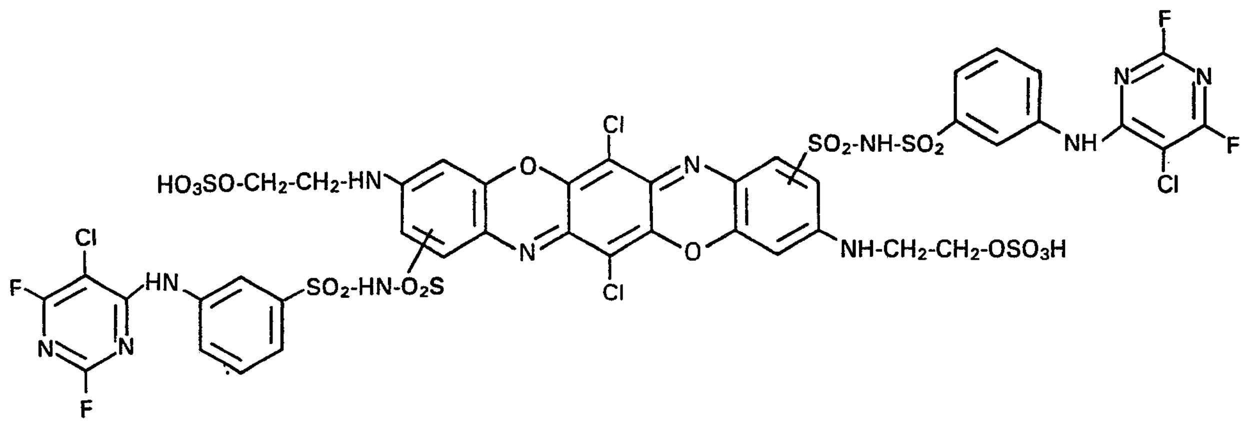

und färbt Baumwolle aus langer Flotte in klaren, kräftigen Blautönen, die gute Echtheitseigenschaften aufweisen.

C.I. Indicator Number 14, $\lambda_{max}$ = 654 nm in Wasser.

Das oben eingesetzte Triphendioxazin-disulfimid gewinnt man analog zu Beispiel 1 wie folgt.

89,7 g 2-(β-Hydroxyethylamino)-5-nitrobenzolsulfonamid werden in 225 ml Wasser und 225 ml Isopropanol nach Zusatz von Raney-Nickel im Autoklaven unter 60 bar Wasserstoffdruck bei 20 bis 50°C reduziert. Nach Zusatz von weiteren 260 ml Wasser und Erhitzen auf 80°C wird das Nickel durch Klärung entfernt und das Filtrat auf 0°C abgekühlt. Das ausgefallene 5-Amino-2-(β-hydroxyethylamino)-benzolsulfonamid wird abgesaugt und getrocknet.

30,0 g des erhaltenen Aminobenzolsulfonamids werden in 300 ml Wasser und 60 ml Isopropanol bei 40°C mit 16,0 g 2,3,5,6-Tetrachlorbenzochinon unter Zugabe von 2 n Sodalösung zwecks laufender Regulierung des pH-Wertes auf 5,5 bis 6,0 kondensiert. Die braune Fällung wird bei 20°C abgesaugt, mit Wasser und Isopropanol gewaschen und getrocknet.

38,0 g des Dianilids werden in 105 ml 20%igem Oleum im Laufe von 2 Stunden bei −5°C eingetragen. Man erwärmt anschliessend auf +15°C und trägt bei 15 bis 20°C 32,3 g Kaliumperoxodisulfat in 45 Minuten ein. Nach beendeter Oxydation rührt man das Reaktionsgemisch in 600 g Eis ein, setzt 60 g Natriumchlorid zu, saugt den Niederschlag bei 20°C ab und wäscht ihn mit 5%iger Natriumchloridlösung. Er kann im Vakuum bei 50°C getrocknet oder in feuchtem Zustand nach Ermittlung des Gehaltes eingesetzt werden.

30,8 g des erhaltenen Triphendioxazinsulfonamids werden in 750 ml Wasser bei pH 9,0 mit 27,0 g 3-Nitrobenzolsulfochlorid bei 30°C kondensiert und die erhaltene Nitrophenyldisulfimidverbindung ohne Zwischenisolierung mit 48,5 g 25%iger Natriumhydrogensulfidlösung bei 60°C reduziert. Die erhaltene Aminoverbindung wird durch Aussalzen, Absaugen und Waschen mit Salzlösung isoliert.

*Beispiel 3*

11,0 g Triphendioxazin-(aminophenylsulfonyl)--sulfonamid aus Beispiel 2 werden in 200 ml Wasser bei 45°C gelöst. Nach Abkühlen auf 20°C lässt man eine Lösung von 2-(2,4-Dichlor-6-triazinyl)-aminobenzol-1,4-disulfonsäure zutropfen, die durch Kondensation von 5,5 g 2-Aminobenzol-1,4-disulfonsäure und 4,0 g Cyanurchlorid in 40 ml Wasser bei 20°C und pH = 5,0 hergestellt wird. Man hält während und nach dem Zutropfen der Reaktivkomponente den pH-Wert im Reaktionsgemisch und 2 n Sodalösung mehrere Stunden lang auf 6,0 und salzt nach beendeter Umsetzung den entstandenen Reaktivfarbstoff mit Natriumchlorid aus. Der Niederschlag wird abgesaugt, mit 20%iger Natriumchloridlösung gewaschen und bei 50°C im Umluftschrank getrocknet. Der erhaltene Farbstoff der Formel

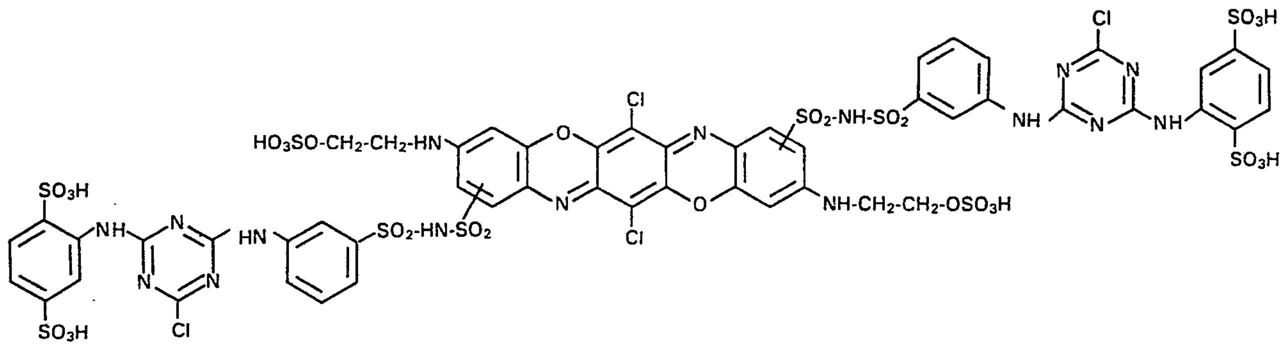

gibt auf Baumwolle nach den bekannten Techniken kräftige blaue Drucke und Färbungen mit guten Echtheitseigenschaften.

C.I. Indicator Number 14, $\lambda_{max}$ = 653 nm in Wasser.

*Beispiel 4*

Setzt man in Beispiel 3 anstelle des dortigen Ausgangsproduktes 10,7 g Triphendioxazin-(aminophenylsulfonyl)-sulfonamid aus Beispiel1 ein und verfährt im übrigen entsprechend, so erhält man einen ähnlichen Farbstoff der Formel

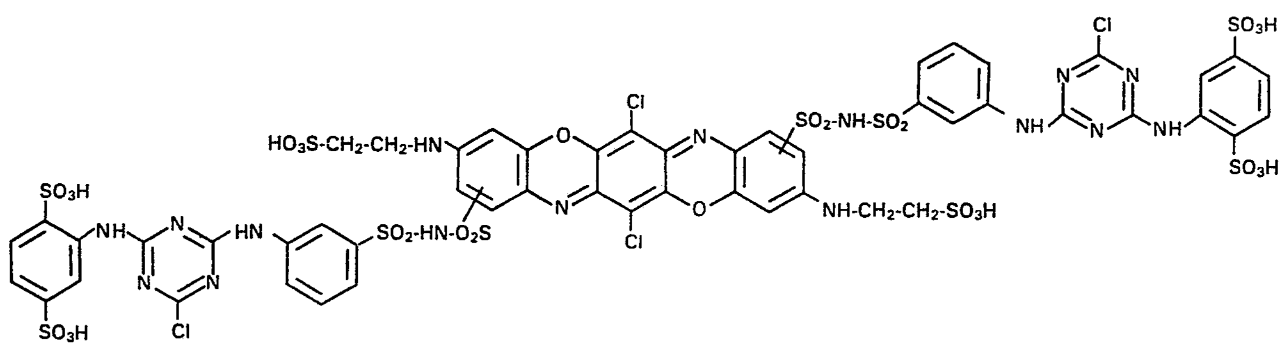

$\lambda_{max}$ = 652 nm in Wasser.

*Beispiel 5*

5,4 g 2-Aminobenzolsulfonsäure werden in 75 ml Wasser bei pH = 5,0 gelöst. Nach Abkühlung auf 0 bis 5°C lässt man 3,1 ml Cyanurfluorid in 5 Minuten zutropfen und hält den pH-Wert mit 2 n Sodalösung auf 4,2 bis 4,7. Man rührt bei diesem pH-Wert noch 15 bis 30 Minuten nach.

12,0 g Triphendioxazin-N-(aminophenylsulfonyl)--sulfonamid aus Beispiel 1 werden in 240 ml Wasser gelöst. Zu der Lösung gibt man bei 0 bis 5°C die Suspension der oben hergestellten Reaktivkomponente im Laufe von 15 Minuten zu und hält im Reaktionsgemisch den pH-Wert mit 2 n Sodalösung auf 6,0 bis 6,5. Nach 5 Stunden lässt man die Temperatur auf 20°C ansteigen und salzt nach dem Ende der Sodaaufnahme den Farbstoff mit Kaliumchlorid aus. Die Fällung wird abgesaugt, mit 20%iger Kaliumchloridlösung gewaschen und nach Zumischen von 0,4 g Phosphatpuffer bei 50°C im Vakuum getrocknet. Der erhaltene Farbstoff entspricht der Formel

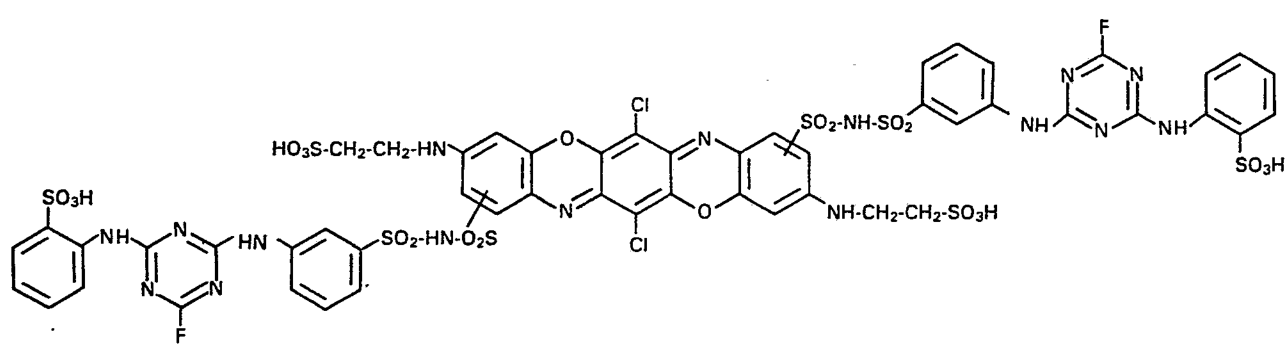

und gibt auf Baumwolle klare blaue Färbungen und Drucke mit guten Echtheitseigenschaften.

C.I. Indicator Number 14, $\lambda_{max}$ = 658 nm in Wasser.

*Beispiel 6*

14,0 g Triphendioxazin-N-(aminophenylsulfonyl)-sulfonamid aus Beispiel 1 werden in 380 ml Wasser und 20 ml Aceton gelöst. Man lässt 6,7 g 5-Chlor-4,6-difluor-2-(fluor-dichlor-methyl)-pyrimidin bei 20 bis 25°C zutropfen und hält den pH-Wert mit 2 n Sodalösung auf 5,8 bis 6,2. Wenn die Kondensation nach mehreren Studen beendet ist, salzt man aus der Lösung den Farbstoff durch Zutropfen von 25%iger Kaliumchloridlösung aus, saugt ab und wäscht den Filterkuchen mit 10%iger Kaliumchloridlösung und trocknet ihn bei 50°C im Umluftschrank. Der erhaltene Farbstoff der Formel

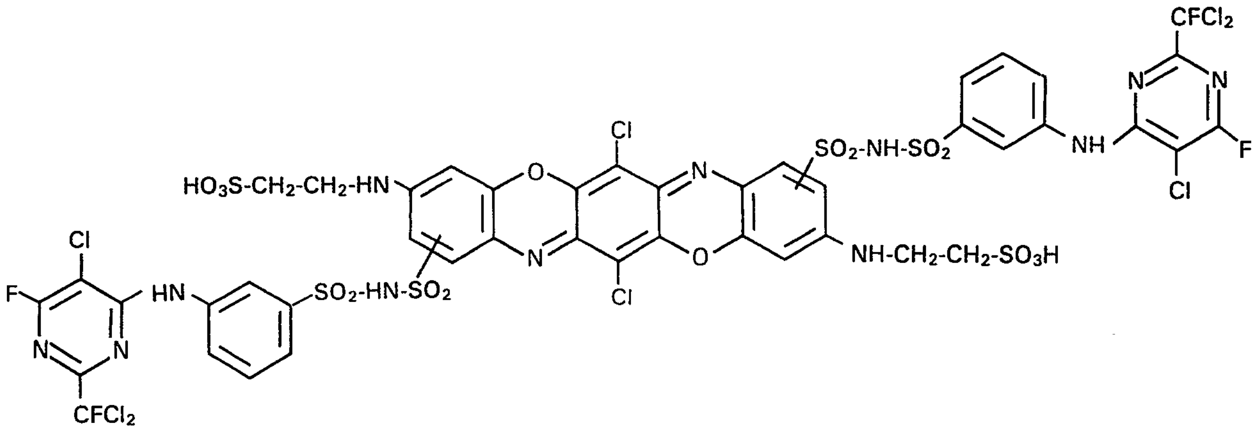

gibt auf Baumwolle zum Beispiel nach dem Kaltverweilverfahren klare blaue Färbungen mit guten Echtheitseigenschaften.

C.I. Indicator Number 14, $\lambda_{max}$ = 652 nm in Wasser.

*Beispiel 7*

12,0 g Triphendioxazin-Verbindung der Formel

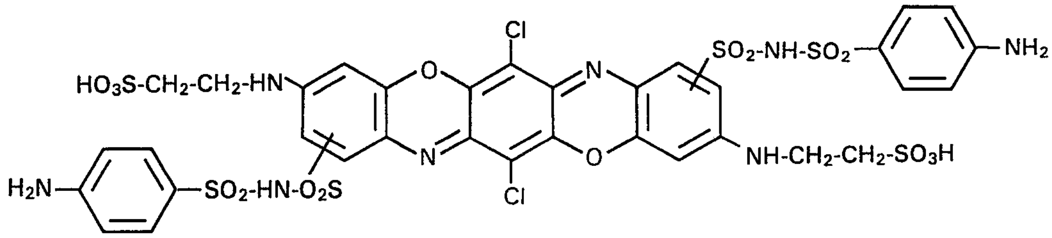

hergestellt analog zu Beispiel 1 aus dem Triphendioxazinsulfamid durch Kondensation mit 4-Nitrobenzolsulfochlorid und anschliessende Reduktion mit Natriumhydrogensulfid, werden in 360 ml Wasser gelöst und bei 20°C und pH 5,5 bis 6,0 mit 2,2 ml 2,4,6-Trifluor-5-chlorpyrimidin umgesetzt.

Nach Aussalzen, Absaugen, Waschen und Trocknen erhält man einen Farbstoff der Formel

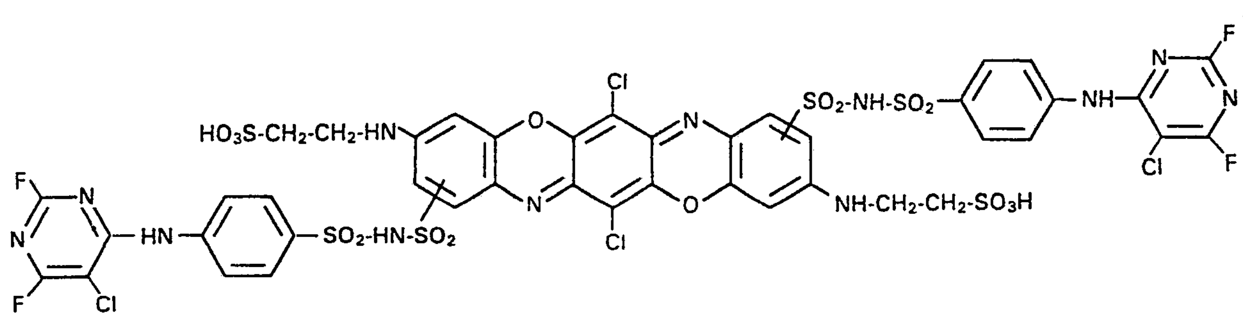

mit dem sich Cellulosefasern in klaren Blautönen licht- und nassecht färben und bedrucken lassen.

C.I. Indicator Number 14, $\lambda_{max}$ = 653 nm in Wasser.

*Beispiel 8*

Setzt man in Beispiel 7 die dort eingesetzte N-(4-Aminophenylsulfonyl)-sulfonamid-Verbindung statt mit 2,4,6-Trifluor-5-chlorpyrimidin mit 5,8 g 5-Chlor-4,6-difluor-2-(fluor-dichlor-methyl)-pyrimidin bei 25°C und pH 5,5 bis 5,8 um, so erhält man nach Aussalzen und Isolieren einen Farbstoff der Formel

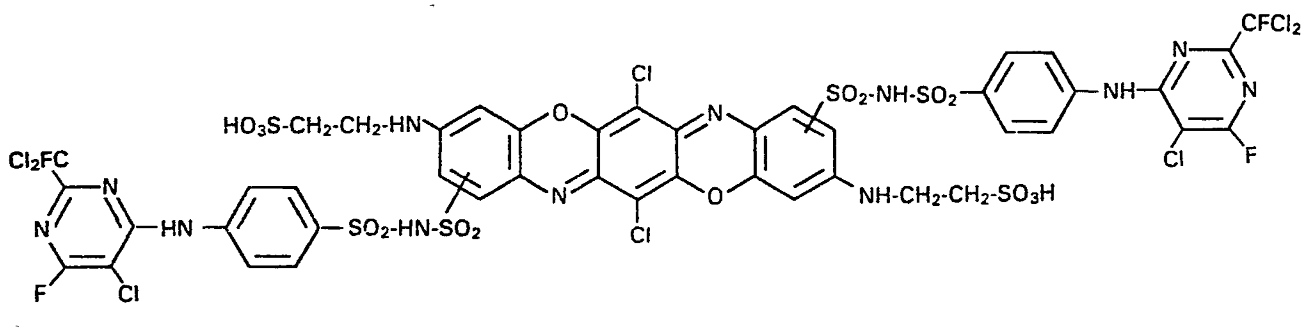

der Baumwolle nach den für Reaktivfarbstoffe üblichen Färbetechniken, beispielsweise aus langer Flotte oder nach dem Klotz-Kaltverweilverfahren, in klaren, nassechten Blautönen färbt.

C.I. Indicator Number 14, $\lambda_{max}$ = 652 nm in Wasser.

*Beispiel 9*

10,0 g Triphendioxazinverbindung der Formel

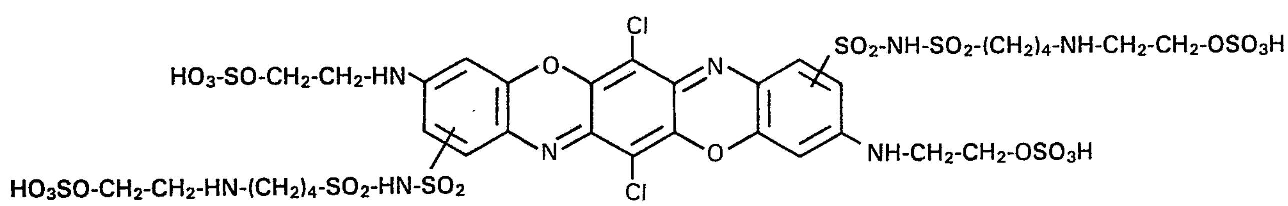

werden in 100 ml Wasser gelöst. Man stellt den pH-Wert mit 2 n Sodalösung auf 7,5 ein und kühlt die Lösung auf 0 bis 5°C ab. Zu der Lösung werden 2,0 ml 2,4,6-Trifluor-5-chlorpyrimidin innerhalb von 15 Minuten zugetropft.

Man hält den pH-Wert mit 2 n Sodalösung weiter auf 7,5 und lässt nach 1 Stunde die Temperatur auf 20°C ansteigen. Nach beendeter Kondensation sättigt man die Farbstofflösung mit Kaliumchlorid, saugt den ausgefällten Farbstoff ab, wäscht ihn mit 25%iger Kaliumchloridlösung und trocknet ihn bei 50°C im Vakuum.

Der Farbstoff entspricht der Formel

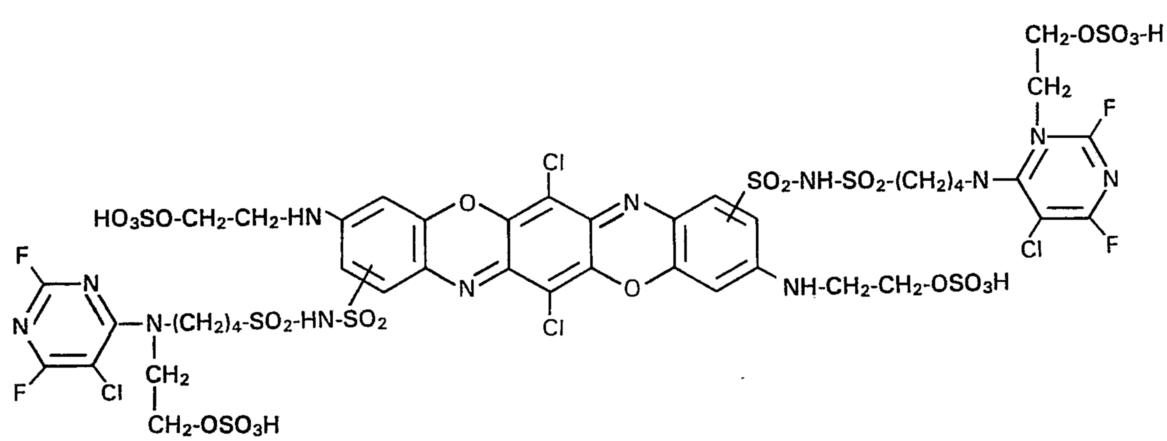

und färbt Cellulosefasern in klaren, nassechten Blautönen.

C.I. Indicator Number 14, $\lambda_{max}$ = 639 nm in Wasser.

Das eingangs des Beispiels 9 eingesetzte Triphendioxazindisulfimid wird wie folgt hergestellt:

20,0 g 2-Chlor-5-nitrobenzolsulfonamid werden in 200 ml Wasser suspendiert. Man stellt mit ca. 32 ml 2 n Natronlauge einen pH-Wert von 11,0 ein. Im Laufe von 4 Stunden werden bei 20°C 58,0 g 4-Chlorbuten-1-sulfochlorid zugetropft. Durch Zutropfen von 2 n Natronlauge wird der pH-Wert auf 10,5 bis 11,0 gehalten. Nach beendeter Umsetzung destilliert man das Wasser im Vakuum ab.

Der verbleibende sirupöse Rückstand von 2-Chlor-5-nitrobenzol-N-(4-chlorbutylsulfonyl)-sulfonamid und durch Hydrolyse entstandener 4-Chlorbutansulfonsäure wird in 51 ml 2-Aminoethanol gelöst. Man erwärmt die Lösung 12 Stunden auf 40°C und lässt, wenn ein Chromatogramm den vollständigen Austausch sowohl des aromatisch als auch des aliphatisch gebundenen Chlors gegen den Hydroxyethylaminorest anzeigt, ca. 250 ml 20%ige Salzsäure zutropfen, bis ein pH-Wert von 7,5 bis 8 erreicht ist.

Die erhaltene Lösung wird mit 1 g Raney-Nickel versetzt und im Autoklaven unter einem Wasserstoffdruck von 80 bar bei 60 bis 65°C reduziert.

Nach Abfiltrieren des Nickels stellt man die erhaltene Lösung des 5-Amino-2-β-hydroxyethylaminobenzol-N-(4-β-hydroxyethylaminobutylsulfonyl)-sulfonamids mit verdünnter Salzsäure auf pH 5,5, setzt eine Aufschlemmung von 2,4 g 2,3,5,6-Tetrachlorbenzochinon hinzu, erwärmt den Ansatz auf 40°C und hält den pH-Wert mit 2 n Sodalösung auf 5,5. Nach beendeter Umsetzung saugt man das in braunen Kristallen ausgefallene Dianilid ab und wäscht den Filterkuchen bis zum praktisch farblosen und chloridfreien Ablauf. Das Produkt wird bei 50°C im Umluftschrank getrocknet.

15,0 g des getrockneten Dianilids werden in 2 bis 3 Stunden in eine Mischung von 29 ml 20%igem Oleum und 10,9 ml 96%iger Schwefelsäure bei 0 bis 5°C eingetragen. Wenn alles gelöst ist, setzt man gleichmässig im Laufe von 30 bis 60 Minuten 5,5 g Kaliumperoxidsulfat zu und hält die Temperatur des Reaktionsgemisches durch leichte Kühlung zwischen 15 und 20°C. Nach beendetem Ringschluss rührt man das Reaktionsgemisch in 310 g Eis ein und isoliert aus der entstandenen Lösung das erhaltene Triphendioxazindisulfimid durch Aussalzen oder durch Fällung mit Aceton.

*Beispiel 10*

15,0 g der am Ende des Beispiels 9 hergestellten Triphendioxazindisulfimid-Komponente werden in 90 ml Wasser bei pH 7,5 gelöst. Man kühlt auf 0 bis 5°C ab und lässt zu der Lösung eine Suspension von 2-(2',4'-Difluortriazinyl)-aminobenzolsulfonsäure zulaufen, die man nach den Angaben des Beispiels 5 aus 6,0 g 2-Aminobenzolsulfonsäure und 3,45 ml Cyanurfluorid herstellt.

Während der Zugabe der Reaktivkomponente und später hält man den pH-Wert mit 2 n Natronlauge auf 7,5 bis 8,0, lässt die Temperatur nach mehreren Stunden auf 20°C ansteigen und salzt nach Beendigung der Natronlaugeaufnahme den Farbstoff durch Sättigung der Lösung mit Kaliumchlorid aus. Der ausgefällte Farbstoff wird abgesaugt, mit Kaliumchloridlösung gewaschen und nach Ansteigen mit Phosphatpufferlösung vom pH 6 im Vakuum bei 50°C getrocknet. Das erhaltene Produkt der Formel

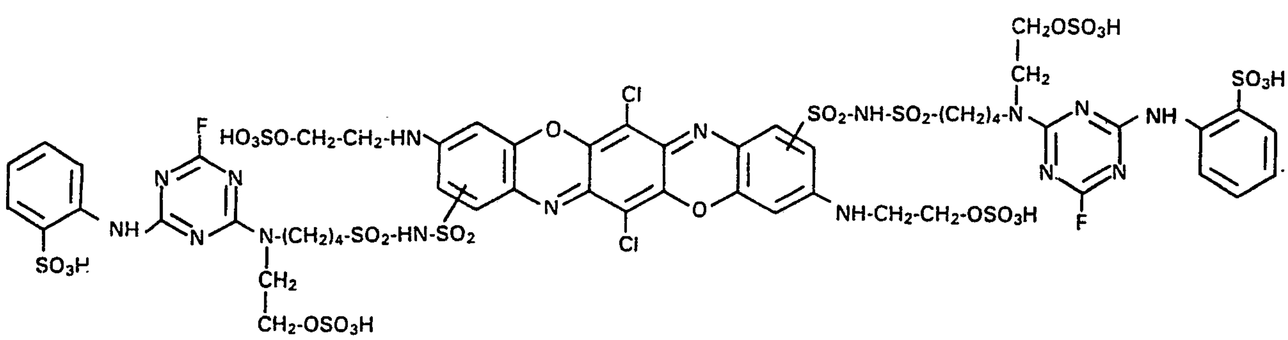

färbt und druckt Cellulosefasern in klaren, nassechten Blautönen.

C.I. Indicator Number 14, $\rho_{max}$ = 639 nm in Wasser.

*Beispiel 11*

10,0 g der am Schluss des Beispiels 2 genannten Triphendioxazin-disulfimid-Komponente werden in 200 ml Wasser und 20 ml Aceton bei 45°C gelöst. Nach Abkühlung werden bei 0 bis 5°C 3,0 ml 2,4-Difluor-6-β-methoxyethoxy-triazin in 10 Minuten zugetropft. Man hält den pH-Wert durch Zutropfen von 2 n Sodalösung ständig zwischen 5,5 und 6,0 und lässt nach etwa 1 Stunde die Temperatur auf 20°C ansteigen. Durch Zutropfen von 250 ml 25%iger Natriumchloridlösung fällt der entstandene Farbstoff in Form feiner Nadeln aus. Man saugt die Fällung ab, wäscht den Filterkuchen mit 20%iger Natriumchloridlösung und trocknet ihn nach Ansteigen mit 0,4 g Phosphatpuffer bei 50°C im Vakuum.

Der Farbstoff der Formel

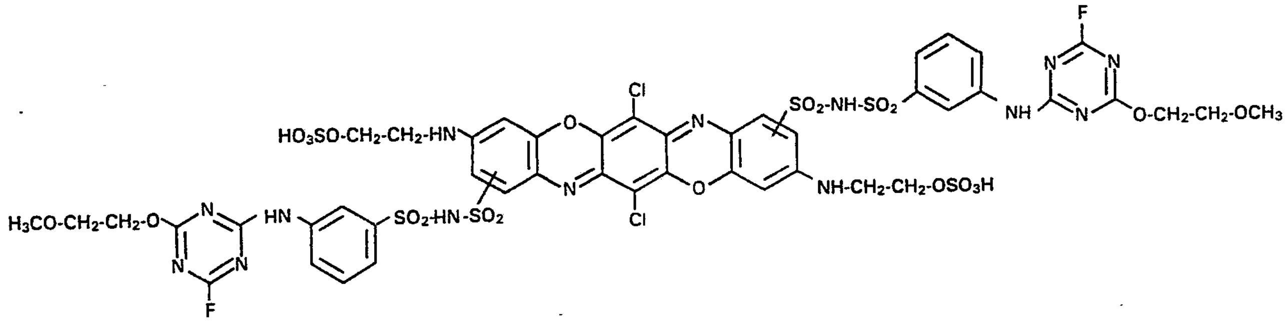

färbt Baumwolle in klaren, nassechten Blautönen.

C.I. Indicator Number 14, $\lambda_{max}$ = 654 nm in Wasser.

Weitere Reaktivfarbstoffe der allgemeinen Formel (I), die ebenfalls zum Färben oder Bedrucken von Cellulosefasern in klaren, kräftigen Blautönen (C.I. Indicator Number 14) geeignet sind, lassen sich aufbauen, wenn man Triphendioxazindisulfimid-Verbindungen der allgemeinen Formel

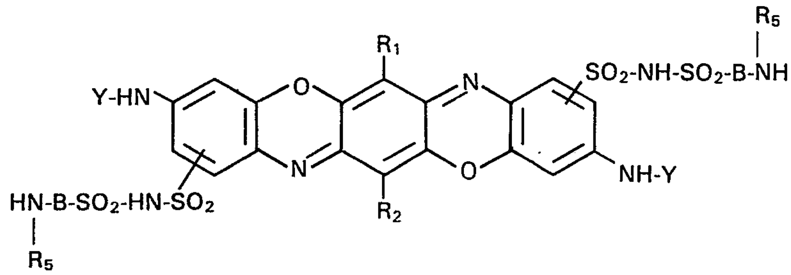

worin $R_1$, $R_2$, $R_5$, B und Y die in den Beispielen nachfolgender Tabelle gekennzeichnete Bedeutung haben, mit den in der letzten Spalte der Tabelle aufgeführten Reaktivkomponenten Z-Halogen kondensiert.

Die Anzahl der herstellbaren Farbstoffe ist dabei nicht auf die angegebenen Kombinationen beschränkt, sondern durch weitere mögliche Kombinationen ergänzt zu denken.

TABELLE

| Nr. | $R_1$ | $R_2$ | $R_5$ | B | Y | Z-Halogen |
|---|---|---|---|---|---|---|
| 12 | Cl | Cl | H | 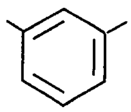 | $-CH_2-CH_2-SO_3H$ | 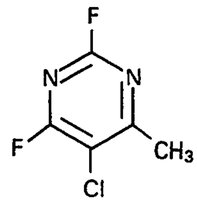 |
| 13 | » | » | » | » | » | 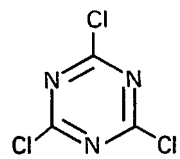 |
| 14 | » | » | » | » | » | 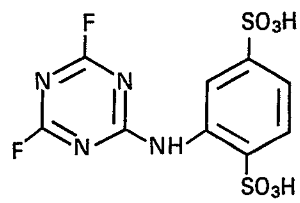 |
| 15 | » | » | » | » | » | 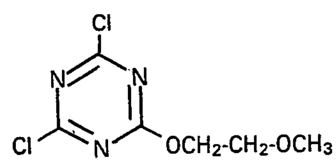 |
| 16 | » | » | » | « | » | 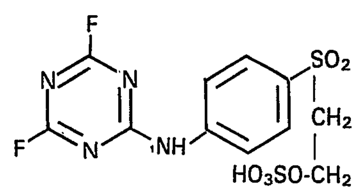 |
| 17 | » | » | » | » | $-CH_2-CH_2-OSO_3H$ | 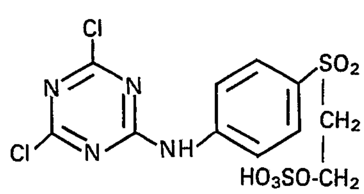 |

TABELLE (Fortsetzung)

| Nr. | $R_1$ | $R_2$ | $R_5$ | B | Y | Z-Halogen |
|---|---|---|---|---|---|---|
| 18 | Cl | Cl | H | 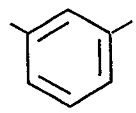 | $-CH_2-CH_2-OSO_3H$ | 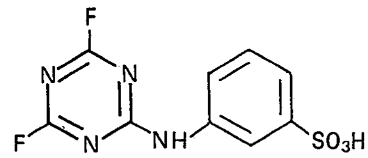 |
| 19 | » | » | » | » | » | 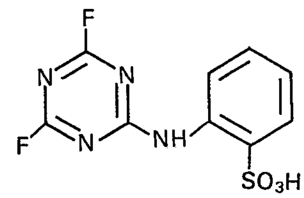 |
| 20 | » | » | » | » | $-CH_2-CH_2-SO_3H$ | 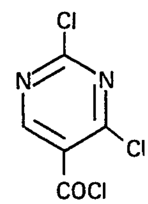 |
| 21 | » | » | » | » | » | 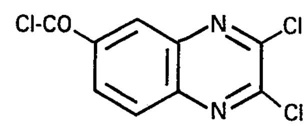 |
| 22 | » | » | » | « | » | 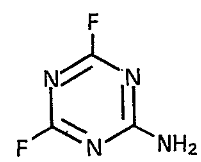 |
| 23 | » | » | » | » | » | 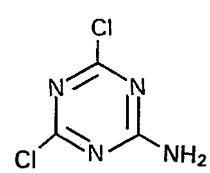 |

TABELLE (Fortsetzung)

| Nr. | $R_1$ | $R_2$ | $R_5$ | B | Y | Z-Halogen |
|---|---|---|---|---|---|---|
| 24 | Cl | Cl | H | 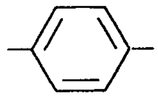 | $-CH_2-CH_2-SO_3H$ | 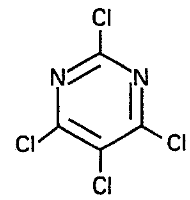 |
| 25 | » | » | » | » | » | 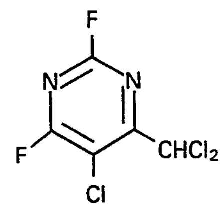 |
| 26 | » | » | » | » | $-CH_2-CH_2-OSO_3H$ | 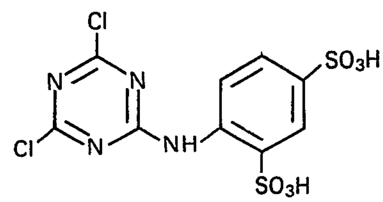 |
| 27 | » | » | » | 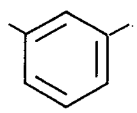 | » | 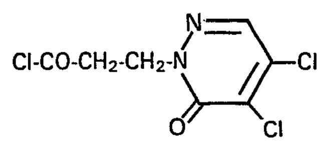 |
| 28 | » | » | » | « | $-CH_2-CH_2-SO_3H$ | 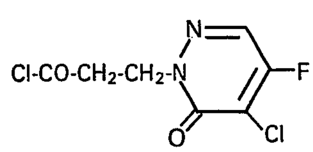 |
| 29 | » | » | » | 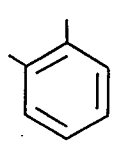 | » | 1. 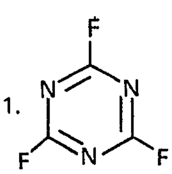 2. 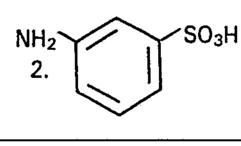 |

TABELLE (Fortsetzung)

| Nr. | $R_1$ | $R_2$ | $R_5$ | B | Y | Z-Halogen |
|---|---|---|---|---|---|---|
| 30 | Cl | Cl | H | 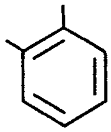 | $-CH_2-CH_2-SO_3H$ | 1. 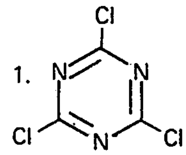 2. 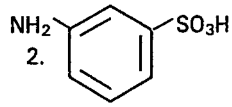 |
| 31 | » | » | » | 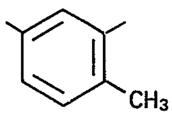 | $-CH_2-CH_2-CH_2-OSO_3H$ | 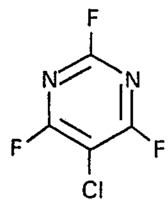 |
| 32 | » | » | » | 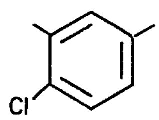 | $-CH_2-CH_2-SO_3H$ | 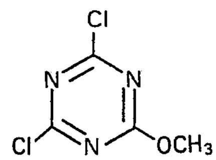 |
| 33 | » | » | » | 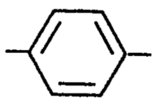 | » | 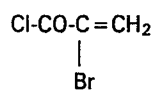 |
| 34 | » | » | » | 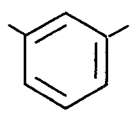 | $-CH_2-CH_2-OSO_3H$ | 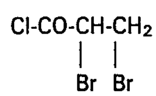 |
| 35 | » | » | » | » | » | 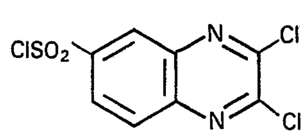 |

TABELLE (Fortsetzung)

| Nr. | $R_1$ | $R_2$ | $R_5$ | B | Y | Z-Halogen |
|---|---|---|---|---|---|---|
| 36 | Cl | Cl | $CH_3$ | 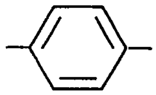 | $-CH_2-CH_2-SO_3H$ | 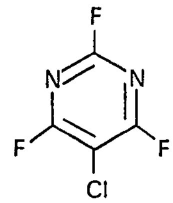 |
| 37 | » | » | » | » | $-CH_2-CH_2-OSO_3H$ | 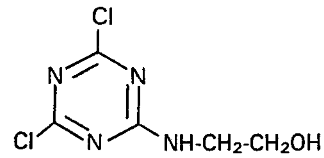 |
| 38 | » | » | » | » | $-CH_2-CH_2-SO_3H$ | 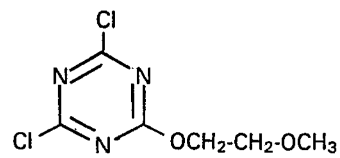 |
| 39 | » | » | H | 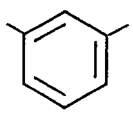 | $-CH_2-CH_2-OSO_3H$ | 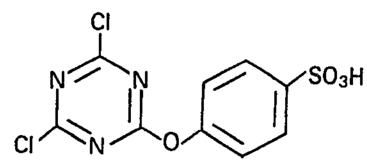 |
| 40 | » | » | » | » | $-CH_2-CH_2-SO_3H$ | 1. 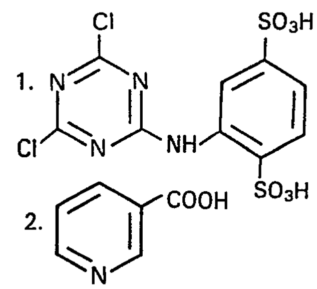 2. |
| 41 | » | » | » | » | » | 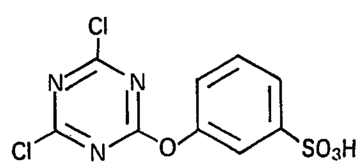 |

TABELLE (Fortsetzung)

| Nr. | $R_1$ | $R_2$ | $R_5$ | B | Y | Z-Halogen |
|---|---|---|---|---|---|---|
| 42 | Cl | Cl | H | 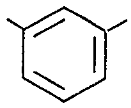 | $-CH_2-CH_2-SO_3H$ | 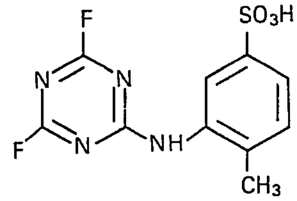 |
| 43 | » | » | » | » | » | 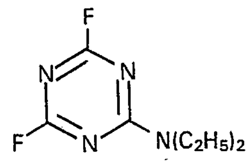 |
| 44 | » | » | » | » | $-CH_2-CH_2-O-CH_2-CH_2-OSO_3H$ | 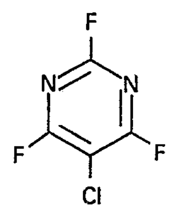 |
| 45 | » | » | » | » | $CH_3$<br>\|<br>$-CH_2-CH-OSO_3H$ | 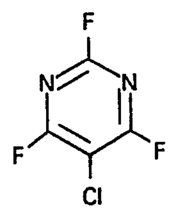 |
| 46 | » | » | » | » | $-CH_2-CH_2-$ 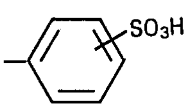 | 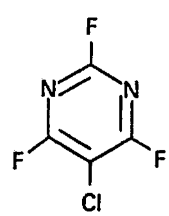 |
| 47 | » | » | » | » | $-CH_2-CH_2-$ 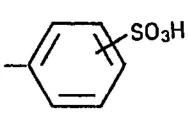 | 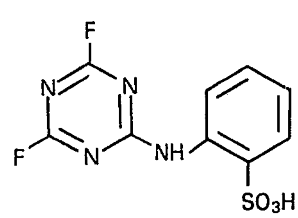 |

TABELLE (Fortsetzung)

| Nr. | $R_1$ | $R_2$ | $R_5$ | B | Y | Z-Halogen |
|---|---|---|---|---|---|---|
| 48 | Cl | Cl | H | 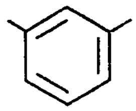 | 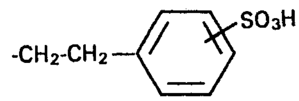 | 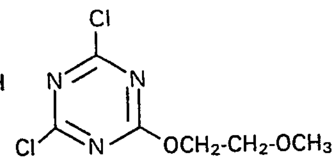 |
| 49 | » | » | » | » | 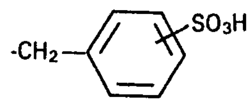 | 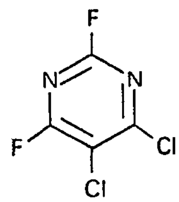 |
| 50 | » | » | » | 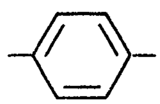 | 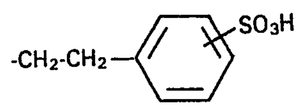 | 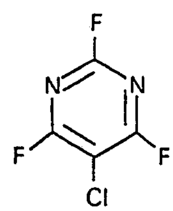 |
| 51 | » | » | » | 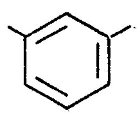 | $-(CH_2)_4-SO_3H$ | 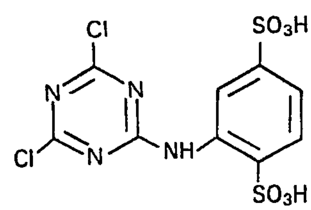 |
| 52 | » | » | » | » | $-(CH_2)_4-OSO_3H$ | 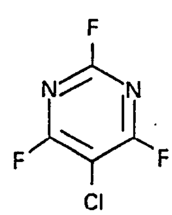 |
| 53 | » | » | » | » | 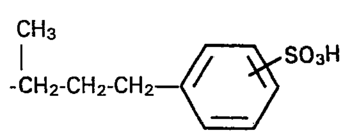 | 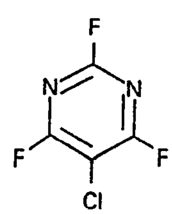 |

TABELLE (Fortsetzung)

| Nr. | $R_1$ | $R_2$ | $R_5$ | B | Y | Z-Halogen |
|---|---|---|---|---|---|---|
| 54 | Cl | Cl | H | 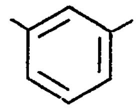 | 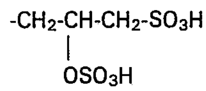 | 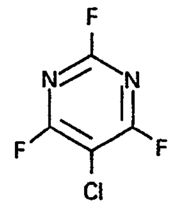 |
| 55 | » | » | » | » | 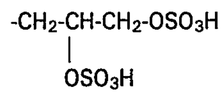 | 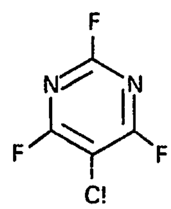 |
| 56 | » | » | » | » | 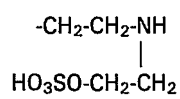 | 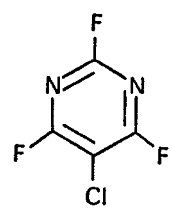 |
| 57 | » | » | » | 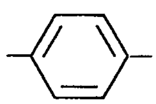 | 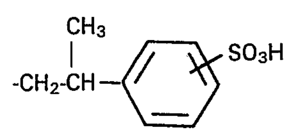 | 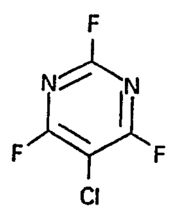 |
| 58 | » | » | » | 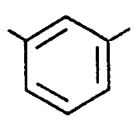 | 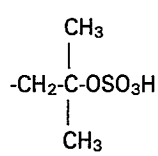 | 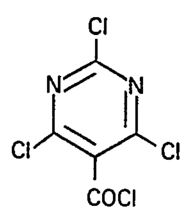 |
| 59 | » | » | » | » | $-CH_2-CH_2-COOH$ | 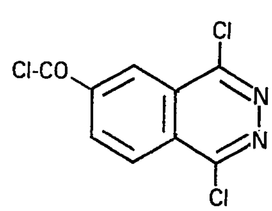 |

TABELLE (Fortsetzung)

| Nr. | $R_1$ | $R_2$ | $R_5$ | B | Y | Z-Halogen |
|---|---|---|---|---|---|---|
| 60 | Cl | Cl | H | 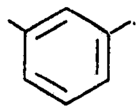 | $-CH_2-CH_2-SO_3H$ | 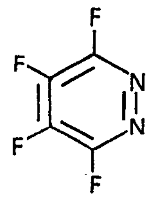 |
| 61 | » | » | » | $-CH_2-CH_2-$ | $-CH_2-CH_2-SO_3H$ | 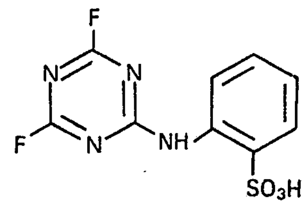 |
| 62 | » | » | $CH_3$ | $-(CH_2)_3-$ | » | 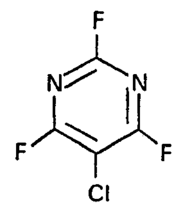 |
| 63 | $CH_3$ | $CH_3$ | H | 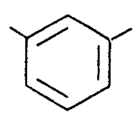 | $-CH_2-CH_2-OSO_3H$ | 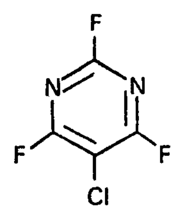 |
| 64 | » | » | » | » | $-CH_2-CH_2-SO_3H$ | 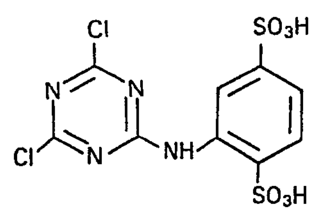 |
| 65 | » | Cl | » | 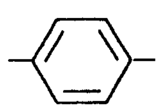 | $-(CH_2)_3-OSO_3H$ | 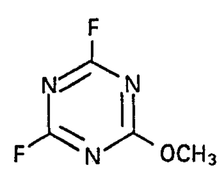 |

TABELLE (Fortsetzung)

| Nr. | $R_1$ | $R_2$ | $R_5$ | B | Y | Z-Halogen |
|---|---|---|---|---|---|---|
| 66 | H | H | H | 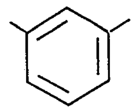 | $-CH_2-CH_2-SO_3H$ | 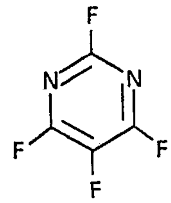 |
| 67 | $NH-COCH_3$ | $NH-COCH_3$ | » | » | $-CH_2-CH_2-OSO_3H$ | 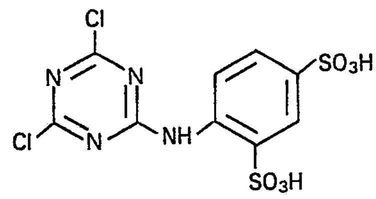 |
| 68 | » | » | » | » | » | 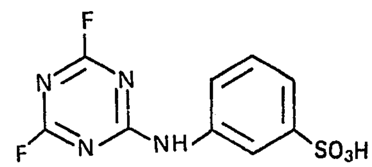 |
| 69 | $OCH_3$ | $OCH_3$ | » | » | $-CH_2-CH_2-SO_3H$ | 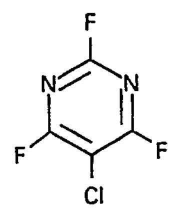 |
| 70 | Br | Br | » | » | » | 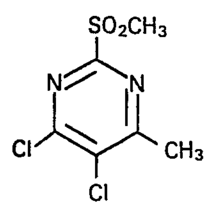 |
| 71 | Cl | Cl | » | » | 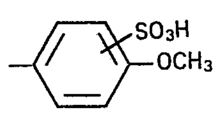 | 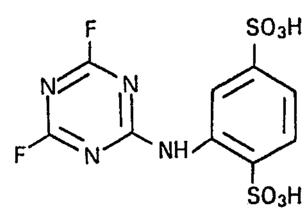 |

TABELLE (Fortsetzung)

| Nr. | $R_1$ | $R_2$ | $R_5$ | B | Y | Z-Halogen |
|---|---|---|---|---|---|---|
| 72 | Cl | Cl | H | 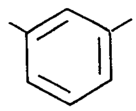 | 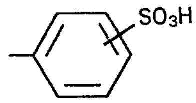 | 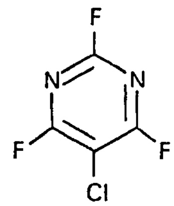 |
| 73 | » | » | » | » | 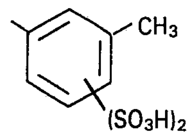 | 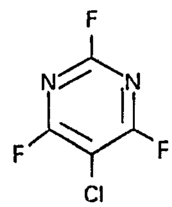 |
| 74 | » | » | $-CH_2-CH_2-OSO_3H$ | $-(CH_2)_4-$ | 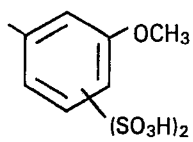 | 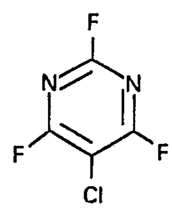 |
| 75 | » | » | $CH_3$ | » | $-CH_2-CH_2-SO_3H$ | 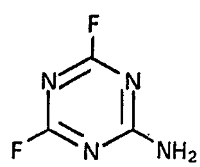 |
| 76 | » | » | H | 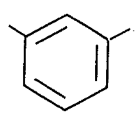 | $-CH_2-COOH$ | 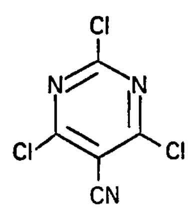 |
| 77 | » | » | » | » | $-CH_2-CH_2-CH_2-OSO_3H$ | 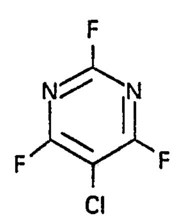 |

TABELLE (Fortsetzung)

| Nr. | $R_1$ | $R_2$ | $R_5$ | B | Y | Z-Halogen |
|---|---|---|---|---|---|---|
| 78 | Cl | Cl | H | 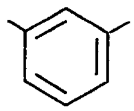 | $-(CH_2)_5-COOH$ | 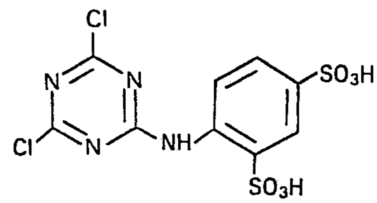 |
| 79 | » | » | » | » | » | 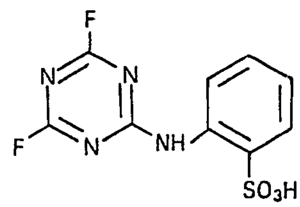 |
| 80 | » | » | » | » | $-CH_2-CH_2-SO_3H$ | 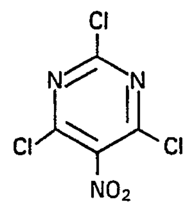 |
| 81 | » | » | » | » | » | 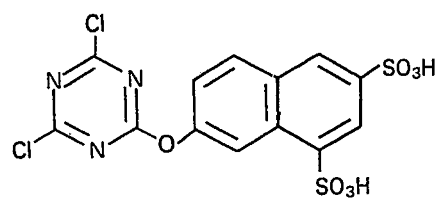 |
| 82 | » | » | » | » | $CH_3$ $CH_3$<br>\| \|<br>$-CH - CH-OSO_3H$ | 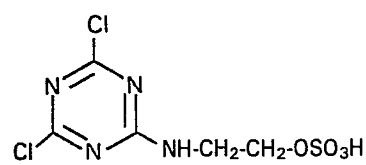 |
| 83 | » | » | $CH_3$ | $-(CH_2)_4-$ | $-CH_2-CH_2-OSO_3H$ | 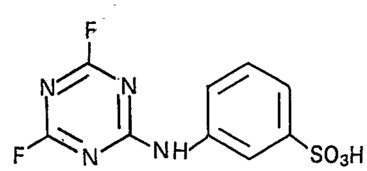 |

TABELLE (Fortsetzung)

| Nr. | $R_1$ | $R_2$ | $R_5$ | B | Y | Z-Halogen |
|---|---|---|---|---|---|---|
| 84 | Cl | Cl | $-CH_2-CH_2-OCH_3$ | $-(CH_2)_4-$ | $-CH_2-CH_2-OSO_3H$ | 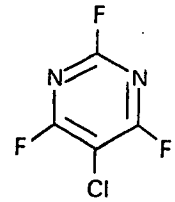 |
| 85 | » | » | $-CH_2-CH_2OH$ | » | $-CH_2-CH_2-SO_3H$ | 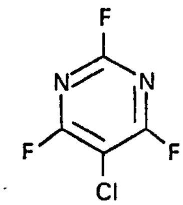 |
| 86 | » | » | $-CH_2-CH_2-OSO_3H$ | » | » | 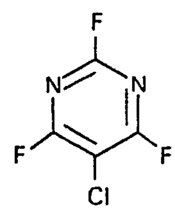 |
| 87 | » | » | $CH_3$ | » | » | 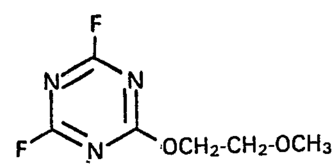 |
| 88 | » | » | » | » | » | 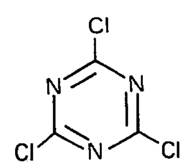 |
| 89 | » | » | $-CH_2-CH_2-OSO_3H$ | » | -H | 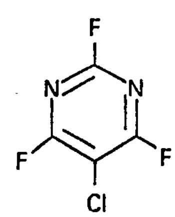 |

TABELLE (Fortsetzung)

| Nr. | $R_1$ | $R_2$ | $R_5$ | B | Y | Z-Halogen |
|---|---|---|---|---|---|---|
| 90 | Cl | Cl | H | 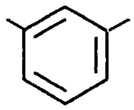 | 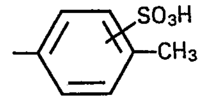 | 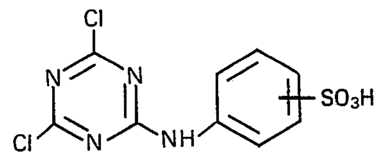 m : p = 1 : 1 |
| 91 | » | » | » | » | 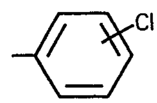 | 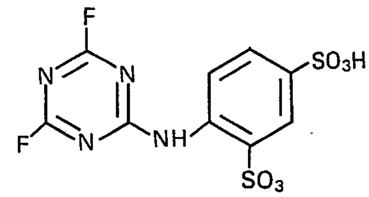 |
| 92 | » | » | $C_2H_5$ | $-(CH_2)_4-$ | $C_2H_5$ | 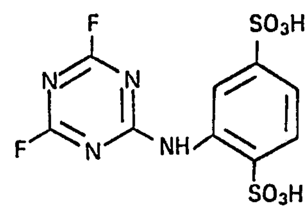 |
| 93 | » | » | $-CH_2-CH_2-OSO_3H$ | » | $CH_2-CH_2-OSO_3H$ | 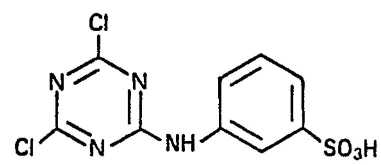 |
| 94 | Br | Br | H | $-CH_2-CH_2-$ | » | 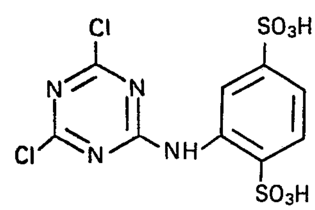 |
| 95 | » | » | » | 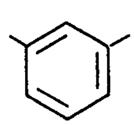 | $CH_2-CH_2-SO_3H$ | 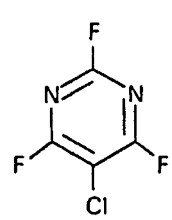 |

**Patentansprüche**

1. Farbstoffe der Formel

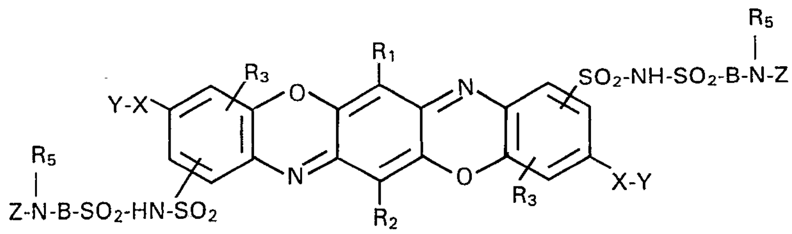

(I)

worin

$R_1$ bzw. $R_2$ Wasserstoff, Chlor, Brom, gegebenenfalls substituiertes $C_1$-$C_4$-Alkyl, gegebenenfalls substituiertes $C_1$-$C_4$-Alkoxy-gegebenenfalls substituiertes Phenoxy, gegebenenfalls substituiertes Acylamino, Carboxy oder gegebenenfalls substituiertes Carbonamid,

$R_3$ Wasserstoff, $C_1$-$C_4$-Alkyl, Cl, Br oder $C_1$-$C_4$-Alkoxy,

X N-$R_4$ oder O,

$R_4$ bzw. $R_5$ Wasserstoff oder gegebenenfalls substituiertes $C_1$-$C_4$-Alkyl,

Y Wasserstoff oder gegebenenfalls substituiertes $C_1$-$C_6$-Alkyl oder durch Heteroatome oder Heteroatome enthaltende Gruppierungen unterbrochene oder substituierte Alkylreste, Cycloalkylreste, Aralkylreste oder gegebenenfalls durch Sulfo, Carboxy, $C_1$-$C_4$-Alkyl, $C_1$-$C_4$-Alkoxy oder Halogen substituierte Phenylreste,

B $C_2$-$C_6$-Alkylenreste oder gegebenenfalls durch $C_1$-$C_4$-Alkyl, Halogen oder $C_1$-$C_4$-Alkoxy substituierte Phenylenreste und

Z Wasserstoff oder einen faserreaktiven Rest bedeuten.

2. Farbstoffe des Anspruchs 1 der Formeln

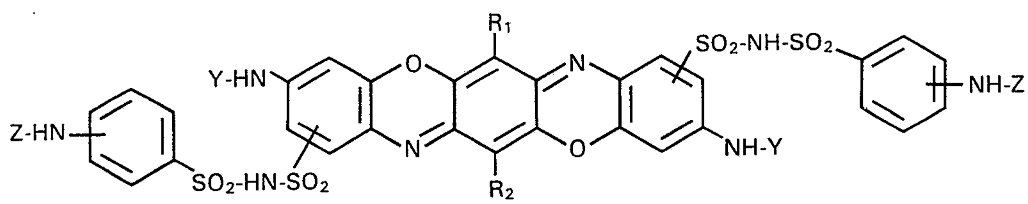

(II)

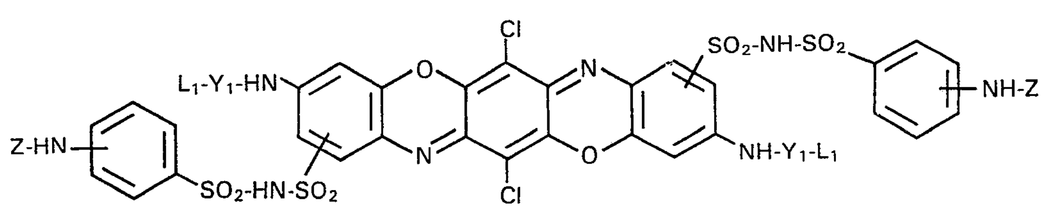

(III)

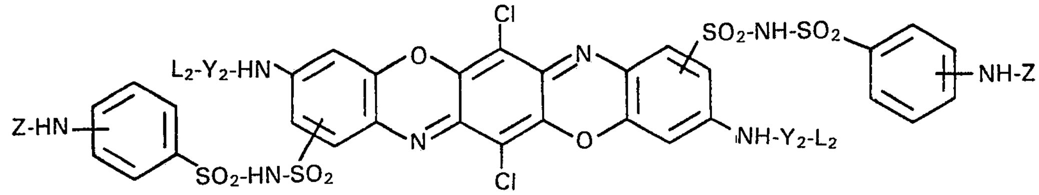

(IV)

worin

$Y_1$ $C_1$-$C_6$-Alkylen, ($C_1$-$C_4$)-Alkylenaryl,
$L_1$ $SO_3H$, $OSO_3H$, COOH, $OPO_3H_2$,
$Y_2$ $C_2$-$C_3$-Alkylen,
$L_2$ $SO_3H$, $OSO_3H$ und worin $R_1$, $R_2$, Y und Z die in Anspruch 1 genannte Bedeutung haben.

3. Verwendung der Farbstoffe der Ansprüche 1 und 2 zum Färben und Bedrucken von hydroxyl- und amidgruppenhaltigen Materialien.

## Claims

1. Dyestuffs of the formula

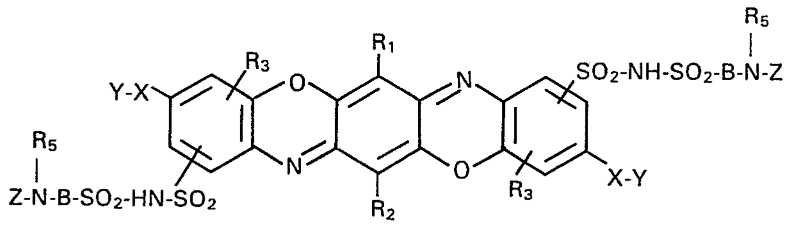

(I)

in which

$R_1$ and $R_2$ denote hydrogen, chlorine, bromine, optionally substituted $C_1$-$C_4$-alkyl, optionally substituted $C_1$-$C_4$-alkoxy, optionally substituted phenoxy, optionally substituted acylamino, carboxyl or optionally substituted carboxamide,

$R_3$ denotes hydrogen, $C_1$-$C_4$-alkyl, Cl, Br or $C_1$-$C_4$-alkoxy,

X denotes N-$R_4$ or O,

$R_4$ and $R_5$ denote hydrogen or optionally substituted $C_1$-$C_4$alkyl,

Y denotes hydrogen, optionally substituted $C_1$-$C_6$-alkyl, alkyl, cycloalkyls or aralkyl radicals which are each interrupted or substituted by hetero atoms or groupings containing hetero atoms, or optionally sulfo-, carboxyl-, $C_1$-$C_4$-alkyl-, $C_1$-$C_4$-alkoxy- or halogen-substituted phenyl radicals,

B denotes $C_2$-$C_6$-alkylene radicals or optionally $C_1$-$C_4$-alkyl-, halogen- or $C_1$-$C_4$-alkoxy-substituted phenylene radicals and

Z denotes hydrogen or a fibre-reactive radical.

2. Dyestuffs of Claim 1 of the formulae

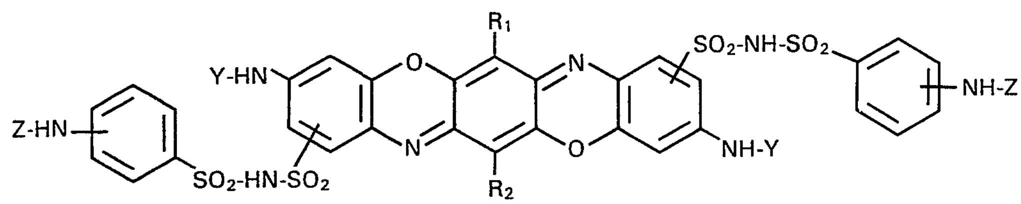

(II)

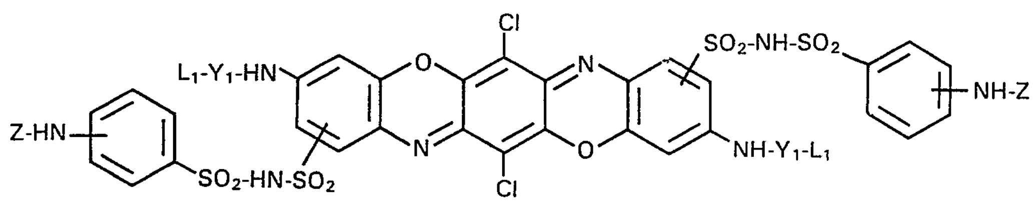

(III)

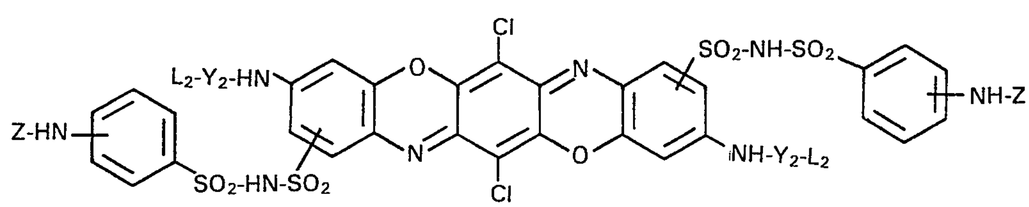

(IV)

in which

$Y_1$ denotes $C_1$-$C_6$-alkylene or ($C_1$-$C_4$)-alkylene-aryl,

$L_1$ denotes $SO_3H$, $OSO_3H$, COOH or $OPO_3H_2$,

$Y_2$ denotes $C_2$-$C_3$-alkylene,

$L_2$ denotes $SO_3H$ or $OSO_3H$ and in which $R_1$, $R_2$, Y and Z have the meaning mentioned in Claim 1.

3. Use of the dyestuffs of Claims 1 and 2 for dyeing and printing hydroxyl- and amino-containing materials.

**Revendications**

1. Colorants de formule:

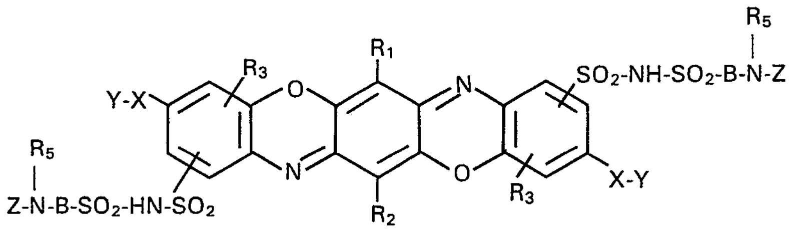

(I)

dans laquelle

$R_1$ et $R_2$ représentent l'hydrogène, le chlore, le brome, un groupe alkyle en $C_1$-$C_4$ éventuellement substitué, un groupe alcoxy en $C_1$-$C_4$ éventuellement substitué, un groupe phénoxy éventuellement substitué, un groupe acylamino éventuellement substitué, un groupe carboxy ou un groupe carbonamide éventuellement substitué,

$R_3$ représente l'hydrogène, Cl, Br ou un groupe $C_1$-$C_4$ ou alcoxy en $C_1$-$C_4$,

X représente N-$R_4$ ou O,

$R_4$ et $R_5$ représentent l'hydrogène ou un groupe alkyle en $C_1$-$C_4$ éventuellement substitué,

Y représente l'hydrogène ou un groupe alkyle en $C_1$-$C_6$ éventuellement substitué ou des restes alkyles, cycloalkyles, arylalkyles interrompus ou substitués par des hétéroatomes ou des groupes contenant des hétéroatomes, ou des restes phényles éventuellement substitués par sulfo, carboxy, alkyle en $C_1$-$C_4$, alcoxy en $C_1$-$C_4$ ou halogène,

B représente des restes alkylènes en $C_2$-$C_6$ ou des restes phénylènes éventuellement substitués par des halogènes ou des groupes alkyles en $C_1$-$C_4$ ou alcoxy en $C_1$-$C_4$, et

Z représente l'hydrogène ou un reste réactif vis-à-vis des fibres.

2. Colorants selon la revendication 1, de formules:

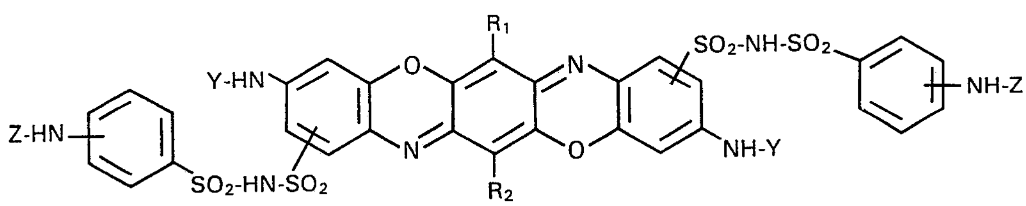

(II)

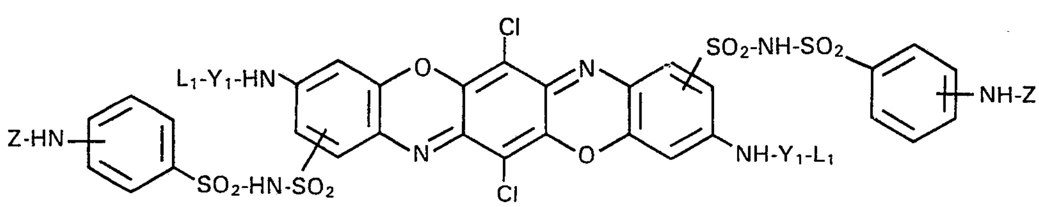

(III)

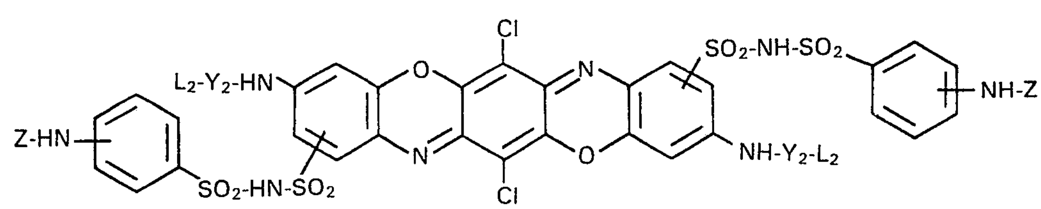

(IV)

dans lesquelles

$Y_1$ représente un groupe alkylène en $C_1$-$C_6$ ou alkylène (en $C_1$-$C_4$)-aryle,

$L_1$ représente $SO_3H$, $OSO_3H$, COOH, ou $OPO_3H_2$,

$Y_2$ représente un groupe alkylène en $C_2$ ou $C_3$,

$L_2$ représente $SO_3H$ ou $OSO_3H$ et $R_1$, $R_2$, Y et Z ont la signification donnée à la revendication 1.

3. Utilisation des colorants selon les revendications 1 et 2 pour la teinture et l'impression de matières contenant des groupes hydroxyles et amides.